# EUROPEAN PATENT APPLICATION

(11) **EP 4 583 361 A1**
(43) Date of publication of application: **09.07.2025**
(21) Application number: 24799114.4
(22) Date of filing: 06.11.2024
(51) Int. Cl.: H02J 7/00, H02H 9/04

(54) **ELECTRONIC DEVICE SUPPORTING PLURALITY OF INTERFACES, AND OPERATION METHOD THEREOF**

(30) Priority: 07.11.2023 KR 20230152370; 14.12.2023 KR 20230182356
(71) Applicant: Samsung Electronics Co., Ltd, Suwon-si, Gyeonggi-do 16677 (KR)
(72) Inventor: JU, Wanjae, Suwon-si, Gyeonggi-do 16677 (KR); KIM, Nansae, Suwon-si, Gyeonggi-do 16677 (KR); KIM, Yeongil, Suwon-si, Gyeonggi-do 16677 (KR); HAN, Sangil, Suwon-si, Gyeonggi-do 16677 (KR)
(74) Representative: HGF
(86) International application number: PCT/KR2024/017401
(87) International publication number: WO 2025/100932

(57) **Abstract**

An electronic device according to an embodiment includes a first interface, a second interface, charging circuitry, first protection circuitry and second protection circuitry connected in series with each other between the first interface and the charging circuitry, wherein the first protection circuitry includes a first element, and the second protection circuitry includes a second element, third protection circuitry and fourth protection circuitry connected in series with each other between the second interface and the charging circuitry, wherein the third protection circuitry includes a third element, and the fourth protection circuitry includes a fourth element, when a first external power source is connected to the first interface, a first power provided from the first external power source is provided to the charging circuitry through the first protection circuitry and the second protection circuitry, and a first current corresponding to the first power is not conducted to the fourth protection circuitry, and, when a second external power source is connected to the second interface, a second power provided from the second external power source is provided to the charging circuitry through the third protection circuitry and the fourth protection circuitry, and a second current corresponding to the second power is not conducted to the second protection circuitry.

## Description

### [Technical Field]

The disclosure relates to an electronic device supporting a plurality of interfaces and a method of operating the same.

### [Background Art]

With the remarkable development of recent information communication technology and semiconductor technology, the supply and use of mobile communication terminals are rapidly increasing. Representatively, mobile communication terminals provide various functions such as a TV viewing function (for example, mobile broadcasting such as digital multimedia broadcasting (DMB) or digital video broadcasting (DVB)), a function of reproducing music (for example, MPEG audio layer-3 (MP3)), a function of taking a picture, and a function of accessing the Internet as well as general communication functions such as a voice call or message transmission/reception.

As the various functions are provided, a function of charging a battery of a portable terminal has become an important issue.

The portable terminal may include an interface capable of receiving power from an external power source through a connection with the external power source. For example, the portable terminal may include a POGP interface, a contact interface, or a USB interface.

### [Detailed Description of the Invention]

### [Technical Problem]

According to the conventional technology, when an external power source is connected to an interface (e.g., a second interface (442)), current flow through a protection circuit (e.g., a first protection circuit (401)) may not be blocked. For example, since current flow through the protection circuit is not blocked, power provided from an external power source to a charging circuit (e.g., a charging circuit (430)) may be applied to an output terminal of the protection circuit (e.g., an output terminal (420)) and output to an input terminal of the protection circuit (e.g., an input terminal (410)). According to the conventional technology, power output to the input terminal of the protection circuit may be provided to the interface (e.g., the first interface (441)), and thus, a problem may occur in which leakage power (or current) may be provided to the interface (e.g., the first interface (441)).

### [Technical Solution]

An electronic device according to an embodiment may include a first interface, a second interface, charging circuitry, first protection circuitry and second protection circuitry connected in series with each other between the first interface and the charging circuitry, and third protection circuitry and fourth protection circuitry connected in series with each other between the second interface and the charging circuitry.

In the electronic device according to an embodiment, the first protection circuitry may be connected to the first interface and the second protection circuitry, the second protection circuitry may be connected to the first protection circuitry and the charging circuitry, the first protection circuitry may include a first element, and the second protection circuit may include a second element.

In the electronic device according to an embodiment, the third protection circuitry may be connected to the second interface and the fourth protection circuitry, the fourth protection circuitry may be connected to the third protection circuitry and the charging circuitry, the third protection circuitry may include a third element, and the fourth protection circuitry may include a fourth element.

In the electronic device according to an embodiment, when a first external power source is connected to the first interface, a first power provided from the first external power source may be provided to the charging circuitry through the first protection circuitry and the second protection circuitry and a first current corresponding to the first power may not be conducted to the fourth protection circuitry.

In the electronic device according to an embodiment, when a second external power source is connected to the second interface, a second power provided from the second external power source may be provided to the charging circuitry through the third protection circuitry and the fourth protection circuitry and a second current corresponding to the second power may not be conducted to the second protection circuitry.

A method of operating an electronic device according to an embodiment may include, when a first external power source is connected to a first interface, providing a first power provided from the first external power source to charging circuitry through first protection circuitry and second protection circuitry.

In the method of operating the electronic device according to an embodiment, a first current corresponding to the first power may be configured not to be conducted to the fourth protection circuitry.

The method of operating the electronic device according to an embodiment may include, when a second external power source is connected to the second interface, providing a second power provided from the second external power source to the charging circuitry through the third protection circuitry and the fourth protection circuitry.

In the method of operating the electronic device according to an embodiment, a second current corresponding to the second power may be configured not to be conducted to the second protection circuitry.

A non-transitory recording medium according to an embodiment may store instructions to perform an operation of providing a first power provided from a first external power source to charging circuitry through first protection circuitry and second protection circuitry when the first external power source is connected to a first interface.

In the non-transitory recording medium according to an embodiment, a first current corresponding to the first power may be configured not to be conducted to the fourth protection circuitry.

The non-transitory recording medium according to an embodiment may store instructions to perform an operation of, when a second external power source is connected to a second interface, providing a second power provided from the second external power source to the charging circuitry through third protection circuitry and the fourth protection circuitry.

In the non-transitory recording medium according to an embodiment, a second current corresponding to the second power may be configured not to be conducted to the second protection circuitry.

### [Brief Description of Drawings]

FIG. 1 is a block diagram of an electronic device within a network environment according to various embodiments.
FIG. 2A illustrates an electronic device including a first interface and a second interface according to an embodiment.
FIG. 2B illustrates the connection between the electronic device and a first external power source through the first interface according to an embodiment.
FIG. 2C illustrates the connection between the electronic device and a second external power source through the second interface according to an embodiment.
FIG. 3 is a block diagram schematically illustrating the electronic device according to an embodiment.
FIG. 4 is a circuit diagram of the conventional electronic device according to a comparative embodiment.
FIG. 5 is a flowchart illustrating an operation in which the electronic device provides power to a charging circuit when an external power source is connected to the first interface according to an embodiment.
FIG. 6 illustrates a circuit diagram of the electronic device and a movement direction of power provided from the first protection circuit to the charging circuit according to an embodiment.
FIG. 7 is a flowchart illustrating an operation in which the electronic device provides power to the charging circuit when the external power source is connected to the second interface according to an embodiment.
FIG. 8 illustrates a circuit diagram of the electronic device and a movement direction of power provided from a third protection circuit to the charging circuit according to an embodiment.
FIG. 9 is a flowchart illustrating an operation in which the electronic device provides power to an external electronic device when the external electronic device is connected to the second interface according to an embodiment.
FIG. 10 illustrates a circuit diagram of the electronic device and a movement direction of power provided from the charging circuit to the external electronic device according to an embodiment.
FIG. 11 is a circuit diagram of the electronic device according to an embodiment.

### [Mode for Carrying out the Invention]

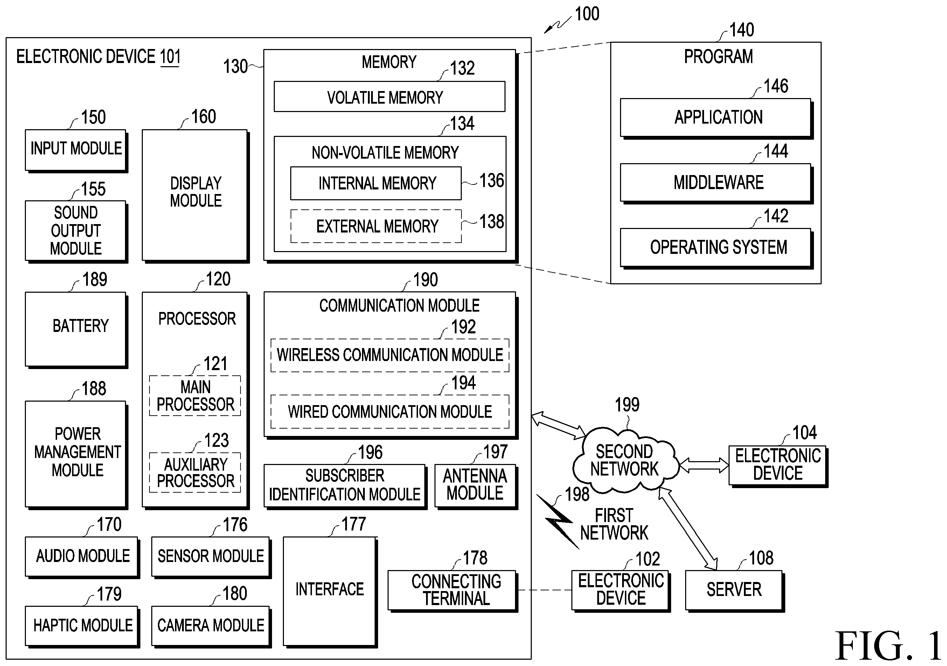

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to an embodiment, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

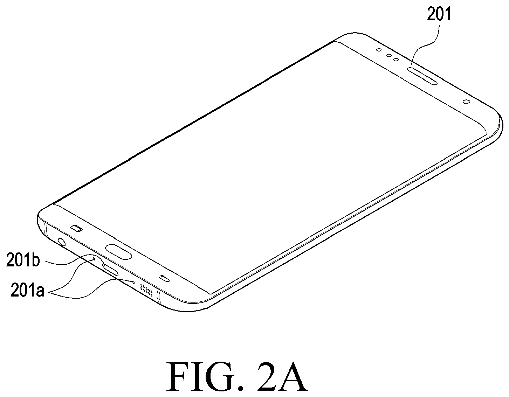

FIG. 2A illustrates an electronic device including a first interface and a second interface according to an embodiment.

Referring to FIG. 2A, according to an embodiment, an electronic device 201 may include a first interface 201a and a second interface 201b which can be connected to an external power source.

According to an embodiment, the first interface 201a may include a pogo interface or a contact type interface. According to an embodiment, the first interface 201a may include two terminals. For example, one terminal may include a ground terminal and the other terminal may include a V_bus terminal to which power is provided from the external power source.

According to an embodiment, the second interface 201b may include a universal serial bus (USB) interface. For example, the second interface 201b may include USB-C or USB-B.

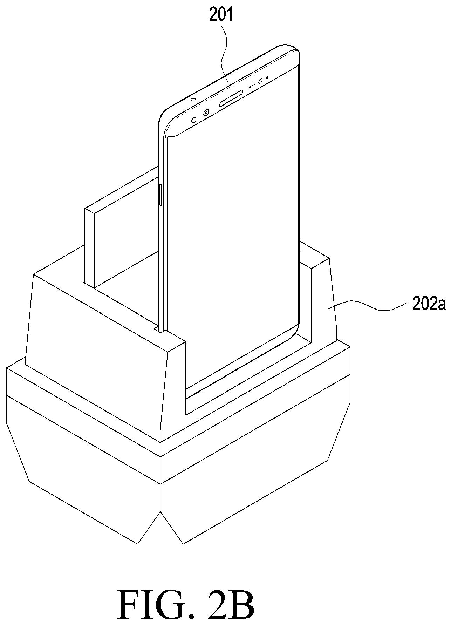

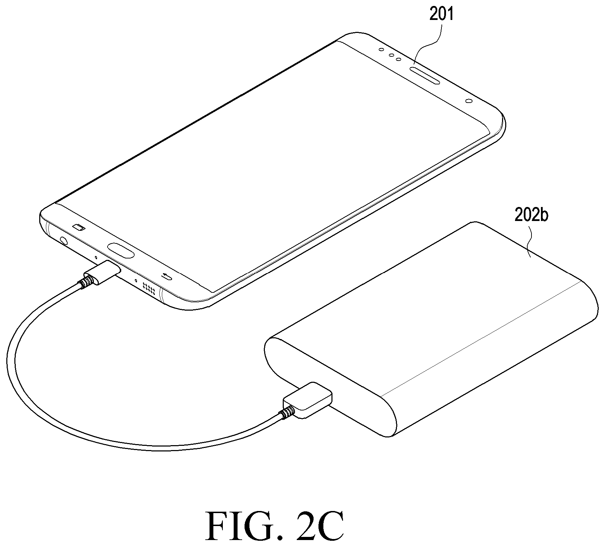

FIG. 2B illustrates the connection between the electronic device and a first external power source through the first interface according to an embodiment. FIG. 2C illustrates the connection between the electronic device and a second external power source through the second interface according to an embodiment.

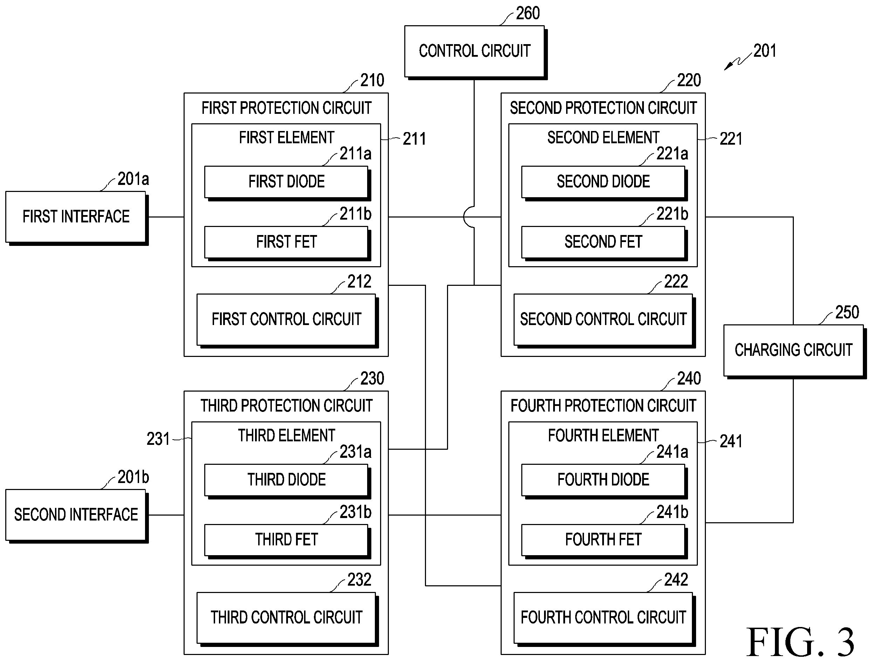

Referring to FIG. 2B, according to an embodiment, the electronic device 201 may be connected to a first external power source 202a through the first interface 201a (for example, the first interface 201a of FIG. 2A). According to an embodiment, the electronic device 201 may acquire power from the first external power source 202a and provide the power to a charging circuit 250 (for example, a charging circuit 250 of FIG. 3). For example, the first external power source 202a may include a cradle.

Referring to FIG. 2C, according to an embodiment, the electronic device 201 may be connected to a second external power source 202b through the second interface 201b (for example, the second interface 201b of FIG. 2A). According to an embodiment, the electronic device 201 may acquire power from the second external power source 202b and provide the power to the charging circuit 250. According to an embodiment, the electronic device 201 may be connected to an external electronic device through the second interface 201b and provide power to the external electronic device.

According to an embodiment, when the first external power source 202a and the first interface 201a are connected and the external electronic device and the second external power source 202b are not connected to the second interface 201b, the electronic device 201 may control the conduction of current through a plurality of elements (for example, an overvoltage protection circuit) included in the electronic device 201 to prevent power from being provided to the second interface 201b.

According to an embodiment, when the second external power source 202b and the second interface 201b are connected and the first external electronic device 202a is not connected to the first interface 201a, the electronic device 201 may control the conduction of current through a plurality of elements (for example, a field effect transistor (FET) of an overvoltage protection circuit) included in the electronic device 201 to prevent power from being provided to the first interface 201a.

FIG. 3 is a block diagram schematically illustrating an electronic device according to an embodiment.

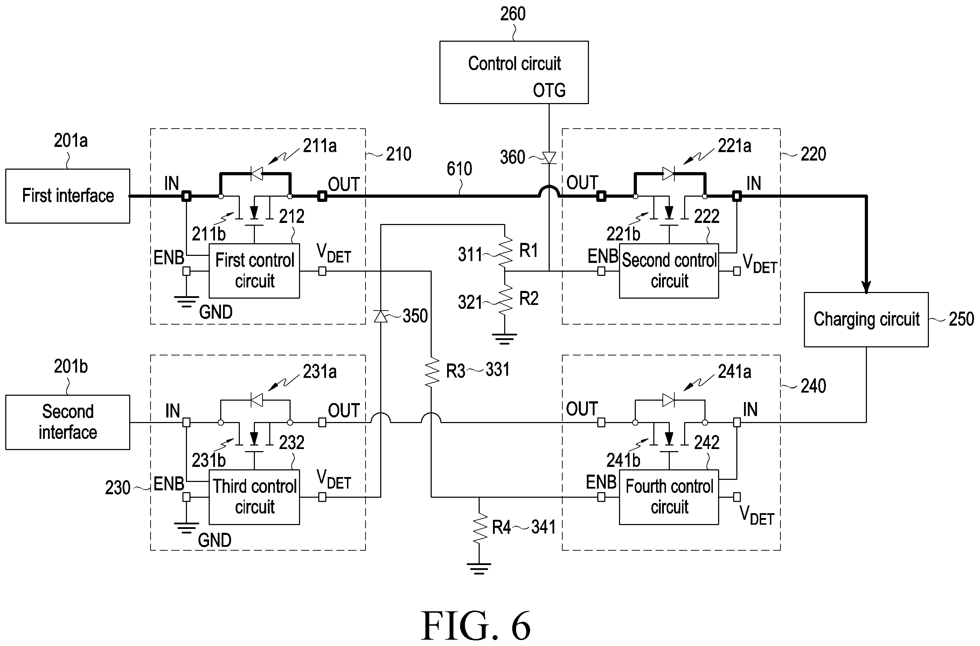

Referring to FIG. 3, according to an embodiment, the electronic device 201 may include a control circuit (or circuitry) 260, a first interface 201a, a second interface 201b, a first protection circuit 210 (or circuitry), a second protection circuit (or circuitry) 220, a third protection circuit (or circuitry) 230, a fourth protection circuit (or circuitry) 240, and a charging circuit (or circuitry) 250. The first protection circuit 210 and second protection circuit 220 may be connected in series with each other between the first interface 201a and the charging circuit 250, wherein the first protection circuit 210 is connected to the first interface 201a and the second protection circuit 220, and the second protection circuit 220 is connected to the first protection circuit 210 and the charging circuitry 250. The third protection circuitry 230 and fourth protection circuitry 240 may be connected in series with each other between the second interface 201b and the charging circuitry 250, wherein the third protection circuitry 230 is connected to the second interface 201b and the fourth protection circuitry 240, and the fourth protection circuitry 240 is connected to the third protection circuitry 230 and the charging circuitry 250. The electronic device 201 may detect that a first external power source is connected to the first interface 201a, and based on detecting that the first external power source is connected to the first interface 201a, provide a first power provided from the first external power source to the charging circuit 250 through the first protection circuit 210 and the second protection circuit 220, and prevent, using the fourth protection circuit 240, a first current corresponding to the first power being conducted to the third protection circuitry 230. The electronic device may detect that a second external power source is connected to the second interface 201b, and based on detecting that the second external power source is connected to the second interface, provide a second power provided from the second external power source to the charging circuit 250 through the third protection circuit 230 and the fourth protection circuit 240, and prevent, using the second protection circuit 220, a second current corresponding to the second power being conducted to the first protection circuitry 210. According to an embodiment, the electronic device 201 may further include elements which are not illustrated in FIG. 3. For example, according to an embodiment, the electronic device 201 may further include a first resistor 311 (for example, a first resistor 311 of FIG. 6), a second resistor 321 (for example, a second resistor 321 of FIG. 6), a third resistor 331 (for example, a third resistor 331 of FIG. 6), a fourth resistor 341 (for example, a fourth resistor 341 of FIG. 6), a fifth element 350 (for example, a fifth element 350 of FIG. 6), and a sixth element 360 (for example, a sixth element 360 of FIG. 6).

According to an embodiment, the control circuit 260 and the charging circuit 250 may be disposed on a main board. According to an embodiment, the first interface 201a, the second interface 201b, the first protection circuit 210, the second protection circuit 220, the third protection circuit 230, and the fourth protection circuit 240 may be disposed on separate main printed board assemblies (PBAs). However, this is only an example, and the locations at which they are disposed are not limited thereto.

According to an embodiment, the first protection circuit 210, the second protection circuit 220, the third protection circuit 230, and the fourth protection circuit 240 may be implemented as overvoltage protection circuits. The first protection circuit 210, the second protection circuit 220, the third protection circuit 230, and the fourth protection circuit 240 may be implemented as overcurrent protection circuits, overload protection circuits, or over temperature protection circuits.

According to an embodiment, the first interface 201a may include a POGO interface or a contact type interface. According to an embodiment, the second interface 201b may include a universal serial bus (USB) interface.

According to an embodiment, the control circuit 260 may be implemented as an application processor (AP) or a power management integrated circuit (PMIC). According to an embodiment, the control circuit 260 may control the overall operation of the electronic device 201. According to an embodiment, the control circuit 260 may be implemented to be the same or similar to the processor 120 of FIG. 1.

According to an embodiment, the charging circuit 250 may include a power management integrated circuit (PMIC), an interface PMIC (IF PMIC), or a charger integrated circuit (IC).

According to an embodiment, the first protection circuit 210 may include the first element 211 and a first control circuit 212 disposed in a first direction. For example, the first protection circuit 210 may include an input terminal (IN) and an output terminal (OUT), wherein the input terminal (IN) is connected to the first interface 201a and the output terminal (OUT) is connected to the second protection circuit 220. According to an embodiment, the first element 211 may include a first diode 211a and a first field effect transistor (FET) 211b. For example, a drain terminal of the first field effect transistor (FET) 211b may be connected to the input terminal (IN) of the first protection circuit 210, and a source terminal of the first field effect transistor (FET) 211b may be connected to the output terminal (OUT) of the first protection circuit 210. For example, a cathode terminal of the first diode 211a may be connected to the input terminal (IN) of the first protection circuit 210, and an anode terminal of the first diode 211a may be connected to the output terminal (OUT) of the first protection circuit 210. According to an embodiment, the first control circuit 212 may control the overall operation of the first protection circuit 210. For example, the first control circuit 212 may be connected to a gate terminal of the first FET 211b and may open and close the gate of the first FET 211b. According to an embodiment, the first FET 211b may control a direction in which the current flows, and the first diode 211a may serve to block the current. For example, when the gate of the first FET 211b is closed, the first diode 211a may block current from flowing from the input terminal (IN) to the output terminal (OUT) of the first protection circuit 210. When the gate of the first FET 211b is open, current may flow from the input terminal (IN) to the output terminal (OUT) of the first protection circuit 210 via the source and drain terminals of the first FET 211b.

According to an embodiment, the second protection circuit 220 may include the second element 221 and a second control circuit 222 disposed in a second direction different from the first direction. For example, the second protection circuit 220 may include an input terminal (IN) and an output terminal (OUT), wherein the input terminal (IN) is connected to the charging circuit 250 and the output terminal (OUT) is connected to the first protection circuit 210. According to an embodiment, the second element 221 may include a second diode 221a and a second field effect transistor (FET) 221b. For example, a source terminal of the second field effect transistor (FET) 221b may be connected to an output terminal of the second protection circuit 220, and a drain terminal of the second field effect transistor (FET) 221b may be connected to an input terminal of the second protection circuit 220. For example, a cathode terminal of the second diode 221a may be connected to an input terminal (IN) of the second protection circuit 220, and an anode terminal of the second diode 221a may be connected to an output terminal (OUT) of the second protection circuit 220. According to an embodiment, the second control circuit 222 may control the overall operation of the second protection circuit 220. For example, the second control circuit 222 may be connected to a gate terminal of the second FET 221b and may open and close the gate of the second FET 221b. According to an embodiment, the second FET 221b may control a direction in which the current flows, and the second diode 221a may serve to block the current. For example, when the gate of the second FET 221b is closed, the second diode 221a may block current from flowing from the input terminal (IN) to the output terminal (OUT) of the second protection circuit 220. When the gate of the second FET 221b is open, current may flow from the input terminal (IN) to the output terminal (OUT) of the second protection circuit 220 via the source and drain terminals of the second FET 221b.

According to an embodiment, the third protection circuit 230 may include the third element 231 and a third control circuit 232 disposed in the first direction. For example, the third protection circuit 230 may include an input terminal (IN) and an output terminal (OUT), wherein the input terminal (IN) is connected to the second interface 201b and the output terminal (OUT) is connected to the fourth protection circuit 240. According to an embodiment, the third element 231 may include a third diode 231a and a third field effect transistor (FET) 231b. For example, a drain terminal of the third field effect transistor (FET) 231b may be connected to an input terminal of the third protection circuit 230, and a source terminal of the third field effect transistor (FET) 231b may be connected to an output terminal of the third protection circuit 230. For example, a cathode terminal of the third diode 231a may be connected to an input terminal (IN) of the third protection circuit 230, and an anode terminal of the third diode 231a may be connected to an output terminal (OUT) of the third protection circuit 230. According to an embodiment, the third control circuit 232 may control the overall operation of the third protection circuit 230. For example, the third control circuit 232 may be connected to a gate terminal of the third FET 231b and may open and close the gate of the third FET 231b. According to an embodiment, the third FET 231b may control a direction in which the current flows, and the third diode 231a may serve to block the current. For example, when the gate of the third FET 231b is closed, the third diode 231a may block current from flowing from the input terminal (IN) to the output terminal (OUT) of the third protection circuit 230. When the gate of the third FET 231b is open, current may flow from the input terminal (IN) to the output terminal (OUT) of the third protection circuit 230 via the source and drain terminals of the third FET 231b.

According to an embodiment, the fourth protection circuit 240 may include the fourth element 241 and a fourth control circuit 242 disposed in the second direction. For example, the fourth protection circuit 240 may include an input terminal (IN) and an output terminal (OUT), wherein the input terminal (IN) is connected to the charging circuit 250 and the output terminal (OUT) is connected to the third protection circuit 230. According to an embodiment, the fourth element 241 may include a fourth diode 241a and a fourth field effect transistor (FET) 241b. For example, a source terminal of the fourth field effect transistor (FET) 241b may be connected to an output terminal of the fourth protection circuit 240, and a drain terminal of the fourth field effect transistor (FET) 241b may be connected to an input terminal of the fourth protection circuit 240. For example, a cathode terminal of the fourth diode 241a may be connected to an input terminal (IN) of the fourth protection circuit 240, and an anode terminal of the fourth diode 241a may be connected to an output terminal (OUT) of the fourth protection circuit 240. According to an embodiment, the fourth control circuit 242 may control the overall operation of the fourth protection circuit 240. For example, the fourth control circuit 242 may be connected to a gate terminal of the fourth FET 241b and may open and close the gate of the fourth FET 241b. According to an embodiment, the fourth FET 241b may control a direction in which the current flows, and the fourth diode 241a may serve to block the current. For example, when the gate of the fourth FET 241b is closed, the fourth diode 241a may block current from flowing from the input terminal (IN) to the output terminal (OUT) of the fourth protection circuit 240. When the gate of the fourth FET 241b is open, current may flow from the input terminal (IN) to the output terminal (OUT) of the fourth protection circuit 240 via the source and drain terminals of the fourth FET 241b.

Each of the protection circuits 210, 220, 230, and 240 according to an embodiment may include one FET element 211b, 221b, 231b, or 241b, and one diode element 211a, 221a, 231a, or 241a. According to an embodiment, the case where the protection circuit includes one FET element and one diode element has an effect of reducing manufacturing costs compared to the case where the protection circuit includes two FET elements and two diode elements having polarities in different directions, an effect of securing the internal space of the electronic device 201, and relatively low complexity of product design.

According to an embodiment, the first protection circuit 210 and the second protection circuit 220 may be connected to each other in series between the first interface 201a and the charging circuit 250. According to an embodiment, the first protection circuit 210 may be connected to the first interface 201a, the second protection circuit 220, and the fourth protection circuit 240. According to an embodiment, the second protection circuit 220 may be connected to the charging circuit 250, the first protection circuit 210, and the third protection circuit 230.

According to an embodiment, the third protection circuit 230 and the fourth protection circuit 240 may be connected to each other in series between the second interface 201b and the charging circuit 250. According to an embodiment, the third protection circuit 230 may be connected to the second interface 201b, the fourth protection circuit 240, and the second protection circuit 220. According to an embodiment, the fourth protection circuit 240 may be connected to the charging circuit 250, the third protection circuit 230, and the first protection circuit 210.

According to an embodiment, when the first external power source is connected to the first interface 201a, the first protection circuit 210 may acquire first power provided from the first external power source. According to an embodiment, the first control circuit 212 may deactivate a blocking function, based on a first voltage corresponding to the first power being lower than a predetermined voltage. For example, the predetermined voltage may include a voltage that needs to be blocked by the first protection circuit 210. For example, the blocking function may be activated when the first voltage is greater than or equal to the predetermined voltage. According to an embodiment, the first protection circuit 210 may provide the first power to the second protection circuit 220. According to an embodiment, deactivating the blocking function may include deactivating a function of blocking the current. According to an embodiment, activating the blocking function may include activating a function of blocking the current. For example, the function of blocking the current may indicate a function of preventing the current from flowing. For example, deactivating the function of blocking the current may indicate a function of making the current flow. For example, the blocking function may be provided by the first element 211. For example, the blocking function may be activated by closing the gate of the first FET 211b. For example, the blocking function may be deactivated by opening the gate of the first FET 211b.

According to an embodiment, the first protection circuit 210 may output the first power to the second protection circuit 220, based on the blocking function being deactivated. At this time, the first protection circuit 210 may output the first voltage to the fourth protection circuit 240. For example, the first voltage may include a voltage that activates the blocking function of the fourth protection circuit 240.

According to an embodiment, the fourth control circuit 242 may acquire a first signal that blocks the current (or power) through the fourth protection circuit 240, based on the first voltage. According to an embodiment, the first signal may include a control signal for blocking the current (or power) through the fourth protection circuit 240. For example, the first signal may include a high signal (for example, 1) of a digital signal. According to an embodiment, the fourth control circuit 242 may control the fourth element 241 to prevent the current from flowing in the fourth element 241, based on the first signal. For example, the fourth control circuit 242 may block the conduction of the current (or power) through the fourth control circuit 242, based on the first signal. No current may flow in the fourth element 241. For example, the blocking function may be provided by the fourth element 241. For example, the blocking function may be activated by closing the gate of the fourth FET 241b. For example, the blocking function may be deactivated by opening the gate of the fourth FET 241b. Accordingly, the electronic device 201 according to an embodiment may prevent the first power provided from the charging circuit 250 from being provided to the second interface 201b through the fourth protection circuit 240 and the third protection circuit 230.

According to an embodiment, when the second external power source is connected to the second interface 201b, the third protection circuit 230 may acquire second power provided from the second external power source. According to an embodiment, the third control circuit 232 may deactivate the blocking function, based on identification that a voltage corresponding to the second power is lower than a predetermined voltage. For example, the predetermined voltage may include a voltage that needs to be blocked by the third protection circuit 230. For example, the blocking function may be provided by the third element 231. For example, the blocking function may be activated by closing the gate of the third FET 231b. For example, the blocking function may be deactivated by opening the gate of the third FET 231b.

According to an embodiment, the third protection circuit 230 may output the second power to the fourth protection circuit 240, based on the blocking function being deactivated. At this time, the third protection circuit 230 may output the second voltage to the second protection circuit 220. For example, the second voltage may include a voltage for activating the blocking function of the second protection circuit 220.

According to an embodiment, the second control circuit 222 may acquire a second signal that blocks the current (or power) through the second protection circuit 220, based on the second voltage. According to an embodiment, the second signal may include a control signal for blocking the current (or power) through the second protection circuit 220. For example, the second signal may include a high signal (for example, 1) of a digital signal. According to an embodiment, the second control circuit 222 may control the second element 221 to prevent the current from flowing in the second element 221, based on the second signal. For example, the second control circuit 222 may block the current (or power) through the second protection circuit 220, based on the second signal. No current may flow in the second element 221. For example, the blocking function may be provided by the second element 221. For example, the blocking function may be activated by closing the gate of the second FET 221b. For example, the blocking function may be deactivated by opening the gate of the second FET 221b. Accordingly, the electronic device 201 according to an embodiment may prevent the second power provided from the charging circuit 250 from being provided to the first interface 201a through the second protection circuit 220 and the first protection circuit 210.

According to an embodiment, when the external electronic device is connected to the second interface 201b, the control circuit 260 may identify that the electronic device 201 enters an on-the-go (OTG) mode. The on-the-go (OTG) mode may include a mode in which the electronic device 201 operates as a host and performs an operation for providing third power output from the charging circuit 250 to the external electronic device.

According to an embodiment, when the external electronic device is connected to the second interface 201b, the fourth protection circuit 240 may acquire the third power from the charging circuit 250.

According to an embodiment, the blocking function of the fourth protection circuit 240 may be deactivated based on a voltage corresponding to the third power being lower than a predetermined voltage. For example, the predetermined voltage may include a voltage that needs to be blocked by the fourth protection circuit 240. According to an embodiment, the fourth protection circuit 240 may output the third power to the third protection circuit 230, based on the conduction of the third power.

At this time, the control circuit 260 may provide a third voltage to the second protection circuit 220. For example, the third voltage may include a predetermined voltage (for example, 1.92 volt (V)). For example, the third voltage may include a voltage that activates the blocking function of the second protection circuit 220. According to an embodiment, the second control circuit 222 may acquire a third signal, based on the third voltage. According to an embodiment, the third signal may include a control signal for blocking the current through the second protection circuit 220. For example, the third signal may include a high signal (for example, 1) of a digital signal. According to an embodiment, the second control circuit 222 may control the second element 221 to prevent the current from flowing in the second element 221, based on the third signal. No current may flow in the second element 221. Accordingly, the electronic device 201 according to an embodiment may prevent the third power output from the charging circuit from being provided to the first interface 201a through the second protection circuit 220 and the first protection circuit 210.

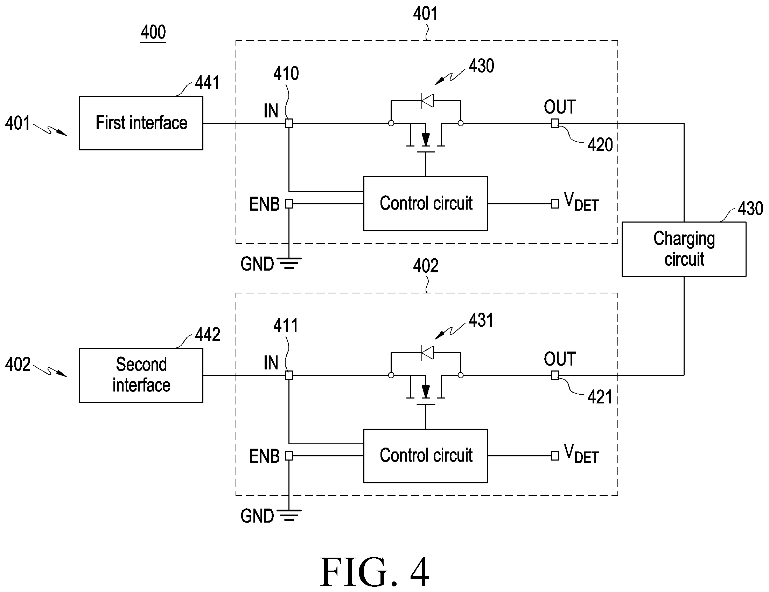

FIG. 4 is a circuit diagram of the conventional electronic device according to a comparative embodiment.

Referring to FIG. 4, according to the comparative embodiment, the electronic device 400 may include a first protection circuit 401, a first interface 441, a charging circuit 430, a second protection circuit 402, and a second interface 442. According to the comparative embodiment, the first protection circuit 401 may include a first element 430 including a FET and a diode. According to the comparative embodiment, the second protection circuit 402 may include a second element 431 including a FET and a diode.

According to the comparative embodiment, an external power source may be connected to the second interface 442. According to the comparative embodiment, when the external power source is connected to the second interface 442, power provided from the external power source may be applied to the second protection circuit 402 through an input terminal 411 of the second protection circuit 402. According to the comparative embodiment, power provided from the external power source may be provided to the charging circuit 430 through an output terminal 421 of the second protection circuit 102 via the second element 431.

According to the comparative embodiment, the conduction of the current through the first protection circuit 401 may not be blocked in the state where the external power source is connected to the second interface 442. According to the comparative embodiment, since the conduction of the current through the first protection circuit 401 is not blocked, the power provided from the charging circuit 430 to the external power source may be applied to the output terminal 420 of the first protection circuit 401 and output to the input terminal 410 of the first protection circuit 401. According to the comparative embodiment, the power output to the input terminal 410 of the first protection circuit 401 may be provided to the first interface 441. According to the comparative embodiment, a problem that leakage power (or current) is provided to the first interface 441 may occur.

When the first interface and the external power source are connected to each other in an embodiment of the present disclosure, the electronic device 201 according to an embodiment may block the conduction of the current through the protection circuit connected to the charging circuit to prevent the power provided from the external power source from being provided to the second interface. When the second interface and the external power source are connected to each other, the electronic device 201 according to an embodiment may block the conduction of the current through the protection circuit connected to the charging circuit to prevent the power provided from the external power source from being provided to the first interface. Accordingly, the electronic device 201 according to an embodiment may solve the problem that power is provided to an interface which is not connected to an external power source.

Operations of the electronic device 201 described in the following drawings may be performed by the control circuit 260. However, for convenience of description, it will be described that the operations performed by the control circuit 260 are performed by the electronic device 201.

Operations of the first protection circuit 210 described in the following drawings may be performed by the first control circuit 212. However, for convenience of description, it will be described that the operations performed by the first control circuit 212 are performed by the first protection circuit 210.

Operations of the second protection circuit 220 described in the following drawings may be performed by the second control circuit 222. However, for convenience of description, it will be described that the operations performed by the second control circuit 222 are performed by the second protection circuit 220.

Operations of the third protection circuit 230 described in the following drawings may be performed by the third control circuit 232. However, for convenience of description, it will be described that the operations performed by the third control circuit 232 are performed by the third protection circuit 230.

Operations of the fourth protection circuit 240 described in the following drawings may be performed by the fourth control circuit 242. However, for convenience of description, it will be described that the operations performed by the fourth control circuit 242 are performed by the fourth protection circuit 240.

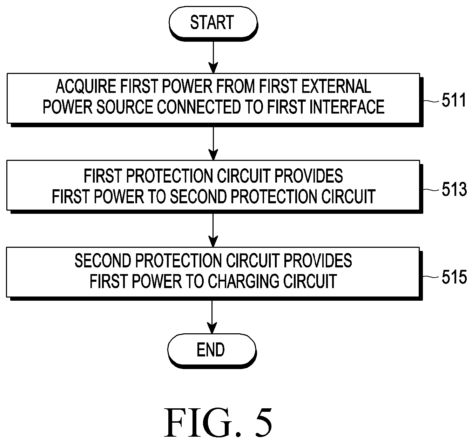

FIG. 5 is a flowchart illustrating an operation in which an electronic device provides power to a charging circuit when an external power source is connected to a first interface according to an embodiment.

Referring to FIG. 5, according to an embodiment, in operation 511, the electronic device 201 may acquire first power from a first external power source connected to the first interface 201a (for example, the first interface 201a of FIG. 3). According to an embodiment, the first interface 201a may include a POGO interface or a contact type interface.

According to an embodiment, in operation 513, when the first external power source is connected to the first interface 201a, the first protection circuit 210 may provide the first power provided from the first interface 201a to the second protection circuit 220. At this time, a voltage corresponding to the first power may be lower than a predetermined voltage (for example, a voltage that needs to be blocked by the first protection circuit). Further, a blocking function of the first protection circuit 210 may be deactivated. According to an embodiment, deactivating the blocking function may include deactivating a function of preventing the current from flowing (a function of blocking the current). According to an embodiment, activating the blocking function may include activating the function of preventing the current from flowing (the function of blocking the current). For example, when the blocking function of the first protection circuit 210 is activated, current may be prevented from flowing through the first protection circuit 210. That is, when the blocking function of the first protection circuit 210 is activated, the first protection circuit 210 prevents current from flowing from the first interface 201a to the second protection circuit 220.

According to an embodiment the first protection circuit 210 may output the first power to the second protection circuit 220 and output the first voltage to the fourth protection circuit 240, based on the conduction of the first power. For example, the first voltage may include a voltage corresponding to the first power or a voltage obtained by controlling the size of the voltage corresponding to the first power. The fourth protection circuit 240 may acquire a first signal based on the first voltage output from the first protection circuit 210. The fourth protection circuit 240 may block the current, based on the first signal. According to an embodiment, the first signal may include a control signal for blocking the current (or power) through the fourth protection circuit 240. For example, the first signal may include a high signal of a digital signal. For example, the fourth protection circuit 240 may block the current by controlling the fourth element 421 (for example, the fourth element 241 of FIG. 3), based on the first signal. For example, no current may flow in the fourth element 241. For example, when the blocking function of the fourth protection circuit 240 is activated, current may be prevented from flowing through the fourth protection circuit 210. That is, when the blocking function of the fourth protection circuit 240 is activated, the fourth protection circuit 240 prevents current from flowing from the charging circuit 250 to the third protection circuit 230.

Accordingly, the electronic device 201 according to an embodiment may prevent the first power from being provided to the second interface 201b through the fourth protection circuit 240 and the third protection circuit 230.

According to an embodiment, in operation 515, the second protection circuit 220 may provide the first power received from the first protection circuit 210 to the charging circuit 250. At this time, a voltage corresponding to the first power may be lower than a predetermined voltage (for example, a voltage that needs to be blocked by the second protection circuit 220). Further, a blocking function of the second protection circuit 220 may be deactivated.

FIG. 6 illustrates a circuit diagram of an electronic device and a movement direction of power provided from the first protection circuit to the charging circuit according to an embodiment.

Referring to FIG. 6, according to an embodiment, the first interface 201a (for example, the first interface 201a of FIG. 3) may be connected to an input terminal (IN) of the first protection circuit 210 (for example, the first protection circuit 210 of FIG. 3). According to an embodiment, an enable terminal (ENB) of the first protection circuit 210 may be connected to the ground (GND). According to an embodiment, the first element 211 (for example, the first element 211 of FIG. 3) may be connected in a first direction between the input terminal (IN) of the first protection circuit 210 and the output terminal (OUT) of the first protection circuit 210. For example, a drain terminal of the FET 211b may be connected to the input terminal (IN) of the first protection circuit 210, and a source terminal of the first FET 211b may be connected to the output terminal (OUT) of the first protection circuit 210. For example, the first control circuit 212 may be connected to a gate terminal of the first FET 211b and may open and close the gate of the first FET 211b. For example, a cathode terminal of the first diode 211a may be connected to the input terminal (IN) of the first protection circuit 210, and an anode terminal of the first diode 211a may be connected to the output terminal (OUT) of the first protection circuit 210. According to an embodiment, the output terminal (OUT) of the first protection circuit 210 may be connected to the output terminal (OUT) of the second protection circuit 220 (for example, the second protection circuit 220 of FIG. 3). According to an embodiment, a detect terminal (V_DET) of the first protection circuit 210 may be connected to a detect terminal (V_DET) of the fourth protection circuit 240 (for example, the fourth protection circuit 240 of FIG. 3) through the third resistor 331. According to an embodiment, the first FET 211b may control a direction in which the current flows, and the first diode 211a may serve to block the current. For example, when the gate of the first FET 211b is closed, the first diode 211a may block current from flowing from the input terminal (IN) to the output terminal (OUT) of the first protection circuit 210. When the gate of the first FET 211b is open, current may flow from the input terminal (IN) to the output terminal (OUT) of the first protection circuit 210 via the source and drain terminals of the first FET 211b.

According to an embodiment, the input terminal (IN) of the second protection circuit 220 may be connected to the charging circuit 250 (for example, the charging circuit 250 of FIG. 3). According to an embodiment, the second element 221 may be connected in a second direction different from the first direction between the output terminal (OUT) and the input terminal (IN) of the second protection circuit 220. For example, a source terminal of the FET 221b may be connected to an output terminal (OUT) of the second protection circuit 220, and a drain terminal of the second FET 221b may be connected to an input terminal (IN) of the second protection circuit 220. For example, the second control circuit 222 may be connected to a gate terminal of the second FET 221b and may open and close the gate of the second FET 221b. For example, a cathode terminal of the second diode 221a may be connected to the input terminal (IN) of the second protection circuit 220, and an anode terminal of the second diode 221a may be connected to the output terminal (OUT) of the second protection circuit 220. According to an embodiment, an enable terminal (ENB) of the second protection circuit 220 may be connected to the ground through the second resistor 321, connected to a detect terminal (V_DET) of the third protection circuit 230 through first resistor 311 and the fifth element 350, and connected to the control circuit 260 (for example, the control circuit 260 of FIG. 3) through the sixth element 360. According to an embodiment, the second FET 221b may control a direction in which the current flows, and the second diode 221a may serve to block the current. For example, when the gate of the second FET 221b is closed, the second diode 221a may block current from flowing from the input terminal (IN) to the output terminal (OUT) of the second protection circuit 220. When the gate of the second FET 221b is open, current may flow from the input terminal (IN) to the output terminal (OUT) of the second protection circuit 220 via the source and drain terminals of the second FET 221b. According to an embodiment, the fifth element 350 and the sixth element 360 may include diodes. According to an embodiment, the fifth element 350 and the sixth element 360 may serve to control the flow of current in order to prevent the overcurrent or overvoltage from being provided to the control circuit 260. For example, the fifth element 350 may be configured to prevent current from flowing to the third protection circuit. According to an embodiment, one end (for example, anode terminal) of the fifth element 350 may be connected to a detect terminal (V_DET) of the third protection circuit 230 and the other end (for example, cathode terminal) of the fifth element 350 may be connected to the first resistor 311. For example, the sixth element 360 may be configured to prevent current from flowing to the control circuit 260. According to an embodiment, one end (for example, cathode terminal) of the sixth element 360 may be connected to the first resistor 311, the second resistor 321, and the enable terminal (ENB) of the second protection circuit 220. According to an embodiment, the other end (for example, anode terminal) of the sixth element 360 may be connected to the control circuit 260.

According to an embodiment, the second interface 201b (for example, the second interface 201b of FIG. 3) may be connected to an input terminal (IN) of the third protection circuit 230 (for example, the third protection circuit 230 of FIG. 3). According to an embodiment, an enable terminal (ENB) of the third protection circuit 230 may be connected to the ground (GND). According to an embodiment, the third element 231 may be connected in a first direction between an input terminal (IN) of the third protection circuit 230 and an output terminal (OUT) of the third protection circuit 230. For example, a drain terminal of the third FET 231b may be connected to the input terminal (IN) of the third protection circuit 230, and a source terminal of the third FET 231b may be connected to the output terminal (OUT) of the third protection circuit 230. For example, the third control circuit 232 may be connected to a gate terminal of the third FET 231b and may open and close the gate of the third FET 231b. For example, a cathode terminal of the third diode 231a may be connected to the input terminal (IN) of the third protection circuit 230, and an anode terminal of the third diode 231a may be connected to the output terminal (OUT) of the third protection circuit 230. According to an embodiment, the output terminal (OUT) of the third protection circuit 230 may be connected to an output terminal (OUT) of the fourth protection circuit 240. According to an embodiment, the third FET 231b may control a direction in which the current flows, and the third diode 231a may serve to block the current. For example, when the gate of the third FET 231b is closed, the third diode 231a may block current from flowing from the input terminal (IN) to the output terminal (OUT) of the third protection circuit 230. When the gate of the third FET 231b is open, current may flow from the input terminal (IN) to the output terminal (OUT) of the third protection circuit 230 via the source and drain terminals of the third FET 231b.

According to an embodiment, an input terminal (IN) of the fourth protection circuit 240 may be connected to the charging circuit 250. According to an embodiment, the fourth element 241 may be connected in a second direction different from the first direction between the output terminal (OUT) and the input terminal (IN) of the fourth protection circuit 240. For example, a source terminal of the fourth FET 241b may be connected to the output terminal (OUT) of the fourth protection circuit 240, and a drain terminal of the fourth FET 241b may be connected to the input terminal (IN) of the fourth protection circuit 240. For example, the fourth control circuit 242 may be connected to a gate terminal of the fourth FET 241b and may open and close the gate of the fourth FET 241b. For example, a cathode terminal of the fourth diode 241a may be connected to the input terminal (IN) of the fourth protection circuit 240, and an anode terminal of the fourth diode 241a may be connected to the output terminal (OUT) of the fourth protection circuit 240. According to an embodiment, an enable terminal (ENB) of the fourth protection circuit 240 may be connected to the ground through the fourth resistor 341 and connected to the detect terminal (V_DET) of the first protection circuit 210 through the third resistor 330. According to an embodiment, the fourth FET 241b may control a direction in which the current flows, and the fourth diode 241a may serve to block the current. For example, when the gate of the fourth FET 241b is closed, the fourth diode 241a may block current from flowing from the input terminal (IN) to the output terminal (OUT) of the fourth protection circuit 240. When the gate of the fourth FET 241b is open, current may flow from the input terminal (IN) to the output terminal (OUT) of the fourth protection circuit 240 via the source and drain terminals of the fourth FET 241b.

According to an embodiment, the first interface 201a may be connected to the first external power source. According to an embodiment, the first power provided from the first external power source may be input into the input terminal (IN) of the first protection circuit 210. At this time, a voltage corresponding to the first power may be lower than a predetermined voltage. The predetermined voltage may indicate a voltage that needs to be blocked by the first protection circuit 210. According to an embodiment, the blocking function of the first protection circuit 210 may be deactivated. For example, in the movement of power illustrated in FIG. 6, the voltage corresponding to the first power is less than the predetermined voltage and the blocking function of the first protection circuit 210 is deactivated accordingly, such that the power (or current) can flow from the first interface 201a to the second protection circuit 220.

According to an embodiment, the first power may be output to the output terminal (OUT) of the first protection circuit 210 through the first element 211 and provided to the second protection circuit 220.

According to an embodiment, the first control circuit 212 may output the first voltage to the detected terminal (V_DET) of first the protection circuit 210, based on the first power. For example, the first voltage may include a voltage corresponding to the first power or a voltage obtained by controlling the size of the voltage corresponding to the first power. For example, the first voltage may include 5.91 volt (V). According to an embodiment, the third resistor 331 and the fourth resistor 341 may serve to reduce the size of a voltage input into the enable terminal (ENB) of the fourth protection circuit 240 and prevent the overvoltage from being applied to the enable terminal (ENB) of the fourth protection circuit 240. For example, a value of the third resistor 331 may include 220 k ohm, and a value of the fourth resistor 341 may include 100 k ohm. However, this is an example, and the values of the first voltage and the resistors may not be limited to the example.

According to an embodiment, the voltage reduced from the first voltage by the third resistor 331 and the fourth resistor 341 may be input into the enable terminal (ENB) of the fourth protection circuit 240. According to an embodiment, the fourth control circuit 242 may acquire a first signal, based on the voltage input into the enable terminal (ENB) of the fourth protection circuit 240. According to an embodiment, the first signal may include a control signal for blocking the conduction of the current through the fourth protection circuit 240. For example, the first signal may include a high signal (for example, 1) of a digital signal. According to an embodiment, the fourth control circuit 242 may control the fourth element 241 to prevent the current from flowing in the fourth element 241, based on the first signal. No current may flow in the fourth element 241. For example, in the movement of power illustrated in FIG. 6, the fourth control circuit 242 acquires the first signal indicating that the blocking function of the fourth protection circuit 240 should be activated, and the blocking function of the fourth protection circuit 240 is activated accordingly, such that the power (or current) cannot flow from the charging circuit 250 to the third protection circuit 230.

According to an embodiment, the second protection circuit 220 may provide the first power received from the first protection circuit 210 to the charging circuit 250. At this time, a voltage corresponding to the first power may be lower than a predetermined voltage. The predetermined voltage may be lower than a voltage that needs to be blocked by the second protection circuit 220. According to an embodiment, the blocking function of the second protection circuit 220 may be deactivated. According to an embodiment, the second control circuit 222 may not block the conduction of the current of the second protection circuit 220. For example, in the movement of power illustrated in FIG. 6, the voltage corresponding to the first power is less than the predetermined voltage and the blocking function of the second protection circuit 220 is deactivated accordingly, such that the power (or current) can flow from the first protection circuit 220 to the charging circuit.

Accordingly, the first power provided from the external power source may be provided to the charging circuit 250 through the first protection circuit 210 and the second protection circuit 220 along the illustrated movement direction 610.

According to an embodiment, at least one element among the first resistor 311, the second resistor 321, the third resistor 331, the fourth resistor 341, the fifth resistor 350, or the sixth resistor 360 may be omitted.

Each of the protection circuits 210, 220, 230, and 240 according to an embodiment may include one FET 211b, 221b, 231b, or 241b, and one diode 211a, 221a, 231a, or 241a. According to an embodiment, the case where the protection circuit includes one FET and one diode has an effect of reducing manufacturing costs compared to the case where the protection circuit includes two FETs and two diodes having polarities in different directions, an effect of securing the internal space of the electronic device 201, and relatively low complexity of product design.

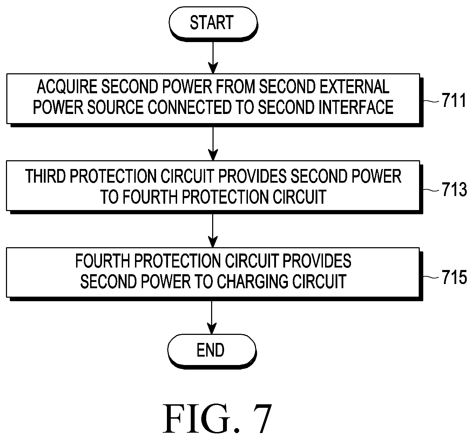

FIG. 7 is a flowchart illustrating an operation in which an electronic device provides power to a charging circuit when an external power source is connected to a second interface according to an embodiment.

Referring to FIG. 7, according to an embodiment, in operation 711, the electronic device 201 (for example, the electronic device 201 of FIG. 3) may acquire second power from a second external power source connected to the second interface 201b (for example, the second interface 201b of FIG. 3). According to an embodiment, the second interface 201b may include a universal serial bus (USB) interface.

According to an embodiment, in operation 713, when the second external power source is connected to the second interface 201b, the third protection circuit 230 may provide the second power provided from the second interface 201b to the fourth protection circuit 240 (for example, the fourth protection circuit 240 of FIG. 3). At this time, a voltage corresponding to the second power may be lower than a predetermined voltage. The predetermined voltage may include a voltage that needs to be blocked by the third protection circuit 230. Further, the blocking function of the third protection circuit 230 may be deactivated. The third protection circuit 230 may output a second voltage to the second protection circuit 220, based on the conduction of the second power. For example, the second voltage may include a voltage corresponding to the second power or a voltage obtained by controlling the size of the voltage corresponding to the second power.

According to an embodiment, the second protection circuit 220 may acquire a second signal based on the second voltage. The second protection circuit 220 may block the current, based on the second signal. According to an embodiment, the second signal may include a control signal for blocking the current through the second protection circuit 220. For example, the second signal may include a high signal of a digital signal. For example, the second protection circuit 220 may block the current by controlling the second element 221 (for example, the second element 221 of FIG. 3), based on the second signal.

According to an embodiment, in operation 715, the fourth protection circuit 240 may provide the second power received from the third protection circuit 230 to the charging circuit 250 (for example, the charging circuit 250 of FIG. 3). At this time, a voltage corresponding to the second power may be lower than a predetermined voltage (for example, a voltage that needs to be blocked by the second protection circuit). Further, the blocking function of the second protection circuit 220 may be deactivated.

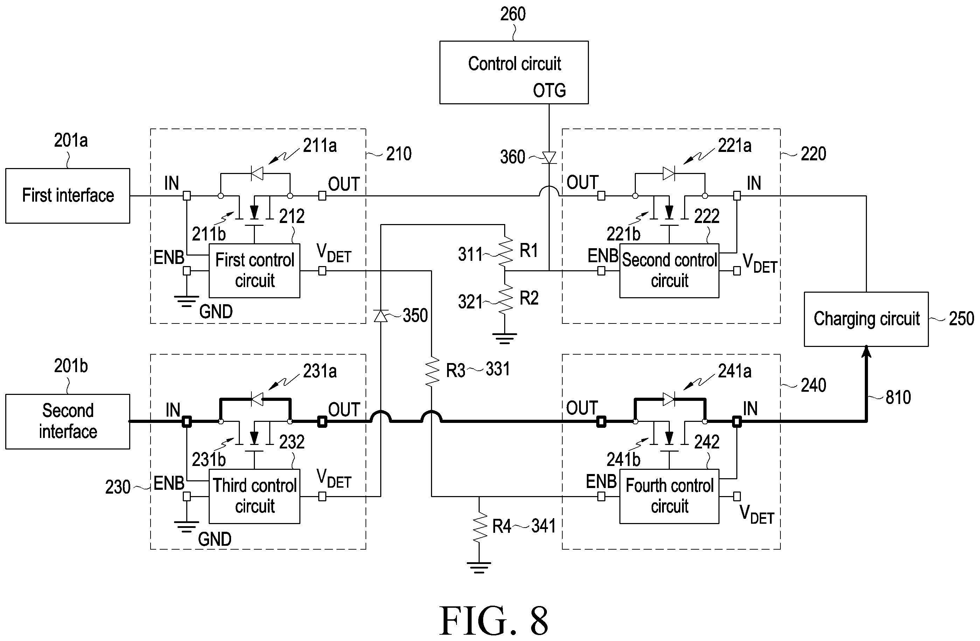

FIG. 8 illustrates a circuit diagram of an electronic device and a movement direction of power provided from a third protection circuit to a charging circuit according to an embodiment.

Referring to FIG. 8, according to an embodiment, the electronic device 201 (for example, the electronic device 201 of FIG. 3) may be connected to a second external power source through the second interface 201a (for example, the second interface 201a of FIG. 3). According to an embodiment, second power provided from a second external power source may be input into an input terminal (IN) of the third protection circuit 230 (for example, the third protection circuit 230 of FIG. 3). According to an embodiment, a voltage corresponding to the second power may be lower than a predetermined voltage. The predetermined voltage may include a voltage that needs to be blocked by the third protection circuit 230. The third protection circuit 230 may not block the current. For example, in the movement of power illustrated in FIG. 8, the voltage corresponding to the second power is less than the predetermined voltage and the blocking function of the third protection circuit 230 is deactivated accordingly, such that the power (or current) can flow from the second interface 201b to the fourth protection circuit 240. According to an embodiment, the second power may be output to the output terminal (OUT) of the third protection circuit 230 through the third element 231 (for example, the third element 231 of FIG. 3) and provided to the fourth protection circuit 240.

According to an embodiment, the third control circuit 232 may output the second voltage to the detected terminal (V_DET) of the third protection circuit 230, based on the second power. For example, the second voltage may include a voltage corresponding to the second power or a voltage obtained by controlling the size of the voltage corresponding to the second power. For example, the second voltage may include 5.91 volt (V). According to an embodiment, the first resistor 311 and the second resistor 321 may serve to reduce the size of a voltage input into the enable terminal (ENB) of the second protection circuit 220 (for example, the second protection circuit 220 of FIG. 3) and prevent the overvoltage from being applied to the second protection circuit 220. For example, values of the first resistor 311 and the second resistor 321 may include 100 k ohm. However, this is an example, and the values of the second voltage and the resistors may not be limited to the example.

According to an embodiment, the voltage reduced from the second voltage by the first resistor 311 and the second resistor 321 may be input into the enable terminal (ENB) of the second protection circuit 220. According to an embodiment, the second control circuit 222 may acquire a second signal, based on the voltage input into the enable terminal (ENB) of the second protection circuit 220. According to an embodiment, the second signal may include a control signal for blocking the current through the second protection circuit 220. For example, the second signal may include a high signal (for example, 1) of a digital signal. According to an embodiment, the second control circuit 222 may control the second element 221 to prevent the current from flowing in the second element 221, based on the second signal. No current may flow in the second element 221. For example, in the movement of power illustrated in FIG. 8, the second control circuit 222 acquires the second signal indicating that the blocking function of the second protection circuit 220 should be activated, and the blocking function of the second protection circuit 220 is activated accordingly, such that the power (or current) cannot flow from the charging circuit 250 to the first protection circuit 210.

According to an embodiment, the fourth protection circuit 240 may provide the second power provided from the third protection circuit 230 to the charging circuit 250. At this time, a voltage corresponding to the second power may be lower than a predetermined voltage. The predetermined voltage may be lower than a voltage that needs to be blocked by the fourth protection circuit 240. According to an embodiment, the blocking function of the fourth protection circuit 240 may be deactivated. According to an embodiment, the fourth control circuit 242 may not block the conduction of the current of the fourth protection circuit 240. For example, in the movement of power illustrated in FIG. 6, the voltage corresponding to the first power is less than the predetermined voltage and the blocking function of the second protection circuit 220 is deactivated accordingly, such that the power (or current) can flow from the first protection circuit 220 to the charging circuit.

Accordingly, the second power provided from the external power source may be provided to the charging circuit 250 through the third protection circuit 230 and the fourth protection circuit 240 along the illustrated movement direction 810.

According to an embodiment, at least one element among the first resistor 311, the second resistor 321, the third resistor 331, the fourth resistor 341, the fifth resistor 350, or the sixth resistor 360 may be omitted.

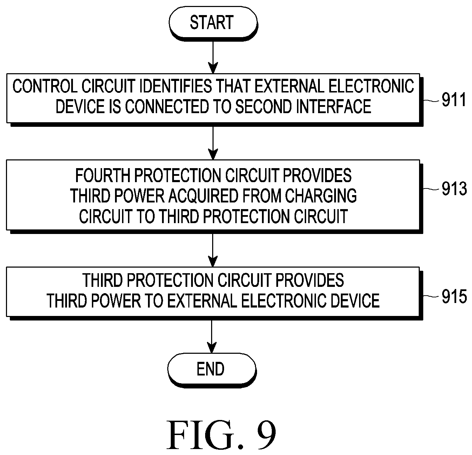

FIG. 9 is a flowchart illustrating an operation in which an electronic device provides power to an external electronic device when the external electronic device is connected to a second interface according to an embodiment.

Referring to FIG. 9, according to an embodiment, in operation 911, when the external electronic device is connected to the second interface 201b (for example, the second interface 201b of FIG. 3), the fourth protection circuit 240 (for example, the fourth protection circuit 240 of FIG. 3) may acquire third power from the charging circuit 250 (for example, the charging circuit 250 of FIG. 3). According to an embodiment, the electronic device 201 (for example, the electronic device 201 of FIG. 3) may identify that the electronic device enters an on-the-go (OTG) mode, based on identification that the second interface 201b and the external electronic device are connected to each other. The on-the-go (OTG) mode may include a mode in which the electronic device 201 operates as a host and performs an operation for providing third power output from the charging circuit 250 to the external electronic device.

According to an embodiment, in operation 913, the fourth protection circuit 240 (for example, the fourth protection circuit 240 of FIG. 3) may provide the third power acquired from the charging circuit 250 to the third protection circuit 230.

According to an embodiment, a voltage corresponding to the third power may be lower than a predetermined voltage. The predetermined voltage may include a voltage that needs to be blocked by the fourth protection circuit 240. Further, the blocking function of the fourth protection circuit 240 may be deactivated. The fourth protection circuit 240 may output third power to the third protection circuit 230, based on the conduction of the third power.

According to an embodiment, the electronic device 201 (for example, the control circuit 260) may provide a third voltage to the second protection circuit 220, based on identification that the second interface 201b and the external electronic device are connected to each other. For example, the third voltage may include a predetermined value (for example, 1.92 volt (V)). According to an embodiment, the second protection circuit 220 may acquire a third signal based on the third voltage. The second protection circuit 220 may block the current, based on the third signal. According to an embodiment, the third signal may include a control signal for blocking the current through the second protection circuit 220. For example, the third signal may include a high signal of a digital signal. For example, the second protection circuit 220 may block the current by controlling the second element 221 (for example, the second element 221 of FIG. 3), based on the third signal. Accordingly, the electronic device 201 according to an embodiment may prevent the third power from being provided to the first interface 201a (for example, the first interface 201a of FIG. 3) through the second protection circuit 220 and the first protection circuit 210.

According to an embodiment, in operation 915, the third protection circuit 230 may provide the third power received from the fourth protection circuit 240 to the external electronic device. At this time, a voltage corresponding to the third power may be lower than a predetermined voltage (for example, a voltage that needs to be blocked by the third protection circuit 230). Further, the blocking function of the second protection circuit 220 may be deactivated.

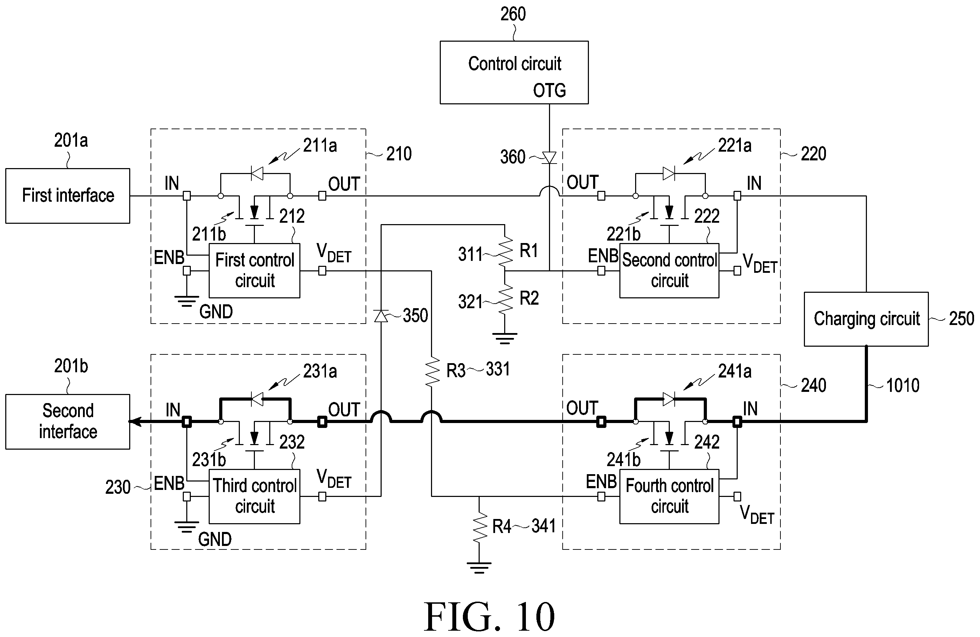

FIG. 10 illustrates a circuit diagram of an electronic device and a movement direction of power provided from a charging circuit to an external electronic device according to an embodiment.

Referring to FIG. 10, according to an embodiment, when the second interface 201b (for example, the second interface 201b of FIG. 3) and the external electronic device are connected to each other, the control circuit 260 (for example, the control circuit 260 of FIG. 3) may identify that the electronic device enters an on-the-go (OTG) mode.

According to an embodiment, the fourth protection circuit 240 (for example, the fourth protection circuit 240 of FIG. 3) may acquire third power from the charging circuit 250 (for example, the charging circuit 250 of FIG. 3) through the input terminal (IN) of the fourth protection circuit 240.

According to an embodiment, the control circuit 260 may provide a third voltage to the second protection circuit 220 (for example, the second protection circuit 220 of FIG. 3), based on identification that the second interface 201b and the external electronic device are connected to each other. According to an embodiment, the third voltage may be input into the enable terminal (ENB) of the second protection circuit 220. For example, the third voltage may include a predetermined voltage (for example, 1.92 V (volt)).

According to an embodiment, the second control circuit 222 (for example, the second control circuit 222 of FIG. 3) may acquire a third signal, based on the third voltage input into the enable terminal (ENB) of the second protection circuit 220. According to an embodiment, the third signal may include a control signal for blocking the current through the second protection circuit 220. For example, the third signal may include a high signal (for example, 1) of a digital signal. According to an embodiment, the blocking function of the second control circuit 222 may be activated based on the third signal. According to an embodiment, the second control circuit 222 may control the second element 221 to prevent the current from flowing in the second element 221 (for example, the second element 221 of FIG. 3), based on the third signal. No current may flow in the second element 221. For example, in the movement of power illustrated in FIG. 10, the second control circuit 222 acquires the third signal indicating that the blocking function of the second protection circuit 220 should be activated, and the blocking function of the second protection circuit 220 is activated accordingly, such that the power (or current) cannot flow from the charging circuit 250 to the first protection circuit 210. Accordingly, the electronic device 201 according to an embodiment may prevent the third power from being provided to the first interface 201a through the second protection circuit 220 and the first protection circuit 210.

According to an embodiment, the fourth protection circuit 240 may output the third power to the third protection circuit 230, based on the conduction of the third power.

According to an embodiment, the third protection circuit 320 may provide the third power received from the fourth protection circuit 240 to the external electronic device. At this time, the blocking function of the fourth protection circuit 240 may be deactivated based on a voltage corresponding to the third power being lower than a predetermined voltage. For example, in the movement of power illustrated in FIG. 10, the voltage corresponding to the third power is less than the predetermined voltage and the blocking function of the fourth protection circuit 240 is deactivated accordingly, such that the power (or current) can flow from the charging circuit 250 to the third protection circuit 230.

Accordingly, the third power may be provided to the external electronic device connected to the second interface 201a through the fourth protection circuit 240 and the third protection circuit 230 along the illustrated movement direction 1010.

According to an embodiment, at least one element among the first resistor 311, the second resistor 321, the third resistor 331, the fourth resistor 341, the fifth resistor 350, or the sixth resistor 360 may be omitted.

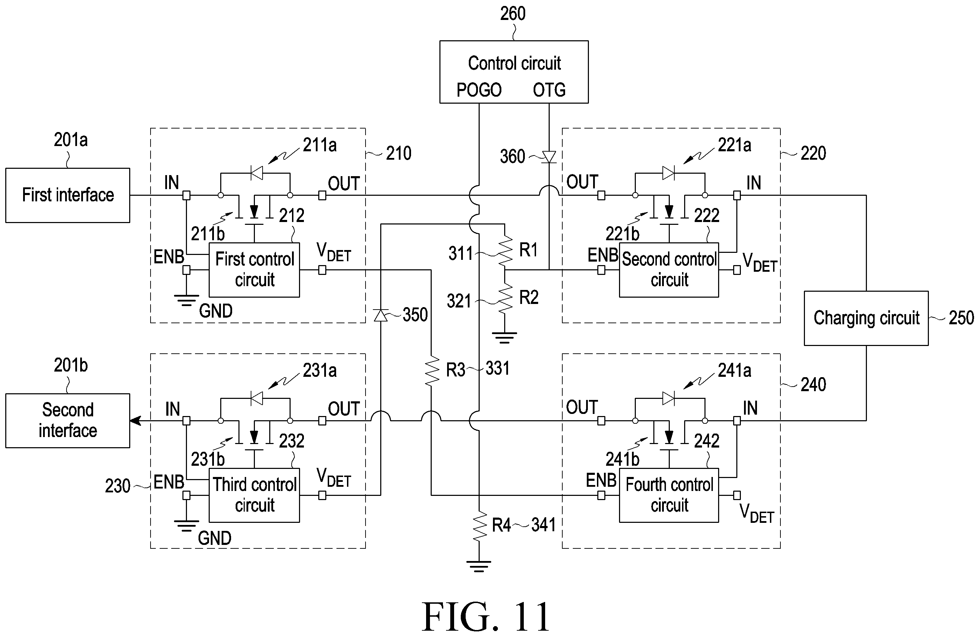

FIG. 11 is a circuit diagram of an electronic device according to an embodiment.

Referring to FIG. 11, according to an embodiment, the control circuit 260 (for example, the control circuit 260 of FIG. 3) may be connected to the fourth protection circuit 240 (for example, the fourth protection circuit 240 of FIG. 3). According to an embodiment, the control circuit 260 may be connected to the first protection circuit 210 (For example, the first protection circuit 210 of FIG. 3), the detect terminal (V_DET) (for example, the detect terminal V_DET of the first protection circuit 210), the fourth resistor 341, and the enable terminal (ENB) of the fourth protection circuit 240 (for example, the fourth protection circuit 240 of FIG. 3) through the third resistor 331.

According to an embodiment, the control circuit 260 may control the charging circuit 250 (for example, the charging circuit 250 of FIG. 3) to switch a charging mode of the electronic device 201 (for example, the electronic device 201 of FIG. 3) from a general charging mode to a fast charging mode.

According to an embodiment, the first interface 201a may be connected to the first external power source. According to an embodiment, first power provided from the first external power source may be provided to the first protection circuit 210.

According to an embodiment, the first control circuit 212 may output the first voltage to the detected terminal (V_DET) of the first protection circuit 210, based on the first power.

According to an embodiment, the control circuit 260 may control the charging circuit 250 (for example, the charging circuit 250 of FIG. 3) to switch the charging mode of the electronic device 201 (for example, the electronic device 201 of FIG. 3) from the general charging mode to the fast charging mode, based on the first voltage output from the detect terminal (V_DET) of the first protection circuit 210.

According to an embodiment, at least one element among the first resistor 311, the second resistor 321, the third resistor 331, the fourth resistor 341, the fifth resistor 350, or the sixth resistor 360 may be omitted.

According to an embodiment, the description of FIGs. 6 to 10 may be equally applied to FIG. 11.

An electronic device according to an embodiment may include a first interface, a second interface, a charging circuit, a first protection circuit and a second protection circuit connected in series with each other between the first interface and the charging circuit, and a third protection circuit and a fourth protection circuit connected in series with each other between the second interface and the charging circuit.

In the electronic device according to an embodiment, the first protection circuit may be connected to the first interface and the second protection circuit, the second protection circuit may be connected to the first protection circuit and the charging circuit, the first protection circuit may include a first element, and the second protection circuit may include a second element.

In the electronic device according to an embodiment, the third protection circuit may be connected to the second interface and the fourth protection circuit, the fourth protection circuit may be connected to the third protection circuit and the charging circuit, the third protection circuit may include a third element, and the fourth protection circuit may include a fourth element.

In the electronic device according to an embodiment, when a first external power source is connected to the first interface, a first power provided from the first external power source may be provided to the charging circuit through the first protection circuit and the second protection circuit, and a first current corresponding to the first power may be configured not to be conducted to the fourth protection circuit.

In the electronic device according to an embodiment, when a second external power source is connected to the second interface, a second power provided from the second external power source may be provided to the charging circuit through the third protection circuit and the fourth protection circuit, and a second current corresponding to the second power may be configured not to be conducted to the second protection circuit.

In the electronic device according to an embodiment, when the first external power source is connected to the first interface, a first voltage output from the first protection circuit, based on the first power, may be provided to the fourth protection circuit.

In the electronic device according to an embodiment, in response to a first signal based on the first voltage, the first power may not be provided to the fourth protection circuit.

In the electronic device according to an embodiment, when the second external power source is connected to the second interface, a second voltage output from the third protection circuit based on the second power may be provided to the second protection circuit.

In the electronic device according to an embodiment, in response to a second signal based on the second voltage, the second power may not be provided to the second protection circuit.

The electronic device according to an embodiment may further include a control circuit.

In the electronic device according to an embodiment, the control circuit may be configured to provide a third voltage to the second protection circuit when an external electronic device is connected to the second interface.

In the electronic device according to an embodiment, third power may be provided to the external electronic device through the fourth protection circuit and the third protection circuit.

In the electronic device according to an embodiment, in response to a third signal based on the third voltage, the third power provided from the charging circuit may not be provided to the second protection circuit.

In the electronic device according to an embodiment, an enable terminal of the first protection circuit and an enable terminal of the third protection circuit may be connected to ground.

In the electronic device according to an embodiment, the first protection circuit may be connected to an enable terminal of the fourth protection circuit.

In the electronic device according to an embodiment, the third protection circuit may be connected to an enable terminal of the second protection circuit.

In the electronic device according to an embodiment, an output terminal of the first protection circuit may be connected to an output terminal of the second protection circuit.

In the electronic device according to an embodiment, an output terminal of the third protection circuit may be connected to an output terminal of the fourth protection circuit.

The electronic device according to an embodiment may further include a first resistor and a second resistor.

In the electronic device according to an embodiment, the second protection circuit may be connected to the first resistor and the second resistor.

In the electronic device according to an embodiment, the first resistor may be connected to the third protection circuit, the second protection circuit, and the second resistor.

In the electronic device according to an embodiment, the second resistor may be connected to the first resistor, the first protection circuit, and ground.

The electronic device according to an embodiment may further include a third resistor and a fourth resistor.

In the electronic device according to an embodiment, the fourth protection circuit may be connected to the third resistor and the fourth resistor.

In the electronic device according to an embodiment, the third resistor may be connected to the first protection circuit, the fourth protection circuit, and the fourth resistor.

In the electronic device according to an embodiment, the fourth resistor may be connected to the third resistor, the fourth protection circuit, and ground.

The electronic device according to an embodiment may further include a fifth diode and a sixth diode to prevent overvoltage from being provided to the control circuit.

In the electronic device according to an embodiment, one end of the fifth diode may be connected to the third protection circuit, and the other end of the fifth diode may be connected to the second protection circuit.

In the electronic device according to an embodiment, one end of the sixth diode may be connected to the second protection circuit, and the other end of the sixth diode may be connected to the control circuit.

In the electronic device according to an embodiment, the first interface may include a pogo interface or a contact interface, and the second interface may include a universal serial bus (USB) interface.

In the electronic device according to an embodiment, a drain terminal of a first FET 211b included in the first element may be connected to an input terminal of the first protection circuit and a source terminal of the first FET may be connected to an output terminal of the first protection circuit.

In the electronic device according to an embodiment, a source terminal of a second FET 221b included in the second element may be connected to an output terminal of the second protection circuit and a drain terminal of the second FET may be connected to an input terminal of the second protection circuit.

In the electronic device according to an embodiment, a drain terminal of a third FET 231b included in the third element may be connected to an input terminal of the third protection circuit and a source terminal of the third FET may be connected to an output terminal of the third protection circuit.

In the electronic device according to an embodiment, a source terminal of a fourth FET 241b included in the fourth element may be connected to an output terminal of the fourth protection circuit and a drain terminal of the fourth FET may be connected to an input terminal of the fourth protection circuit.

A method of operating an electronic device according to an embodiment may include an operation of, when a first external power source is connected to a first interface, providing a first power provided from the first external power source to a charging circuit through a first protection circuit and a second protection circuit.

In the method of operating the electronic device according to an embodiment, the first power may be configured not to be provided to the fourth protection circuit.

The method of operating the electronic device according to an embodiment may include an operation of, when a second external power source is connected to the second interface, providing a second power provided from the second external power source to the charging circuit through the third protection circuit and the fourth protection circuit.

In the method of operating the electronic device according to an embodiment, the second power may be configured not to be provided to the second protection circuit.

The method of operating the electronic device according to an embodiment may further include an operation of, when the first external power source is connected to the first interface, providing a first voltage output from the first protection circuit, based on the first power, to the fourth protection circuit.

In the method of operating the electronic device according to an embodiment, in response to the first signal based on the first voltage, the first power may be configured not to be provided to the fourth protection circuit in response to a first signal based on the first voltage.

The method of operating the electronic device according to an embodiment may further include an operation of, when the second external power source is connected to the second interface, providing a second voltage output from the third protection circuit, based on the second power, to the second protection circuit.

In the method of operating the electronic device according to an embodiment, the second power may be configured not to be provided to the third protection circuit.

The method of operating the electronic device according to an embodiment may further include, when an external electronic device is connected to the second interface, an operation of providing a predetermined third voltage to the second protection circuit and an operation of providing a third power provided from the charging circuit to the external electronic device through the fourth protection circuit and the third protection circuit.

In the method of operating the electronic device according to an embodiment, in response to a third signal based on the third voltage, the third power may be configured not to be provided to the second protection circuit

A non-transitory recording medium according to an embodiment may store instructions to perform an operation of, when a first external power source is connected to a first interface, providing a first power provided from the first external power source to a charging circuit through a first protection circuit and a second protection circuit .

In the non-transitory recording medium according to an embodiment, the first power may be configured not to be provided to a fourth protection circuit.

The non-transitory recording medium according to an embodiment may store instructions to perform an operation of, when a second external power source is connected to a second interface, providing a second power provided from the second external power source to the charging circuit through a third protection circuit and the fourth protection circuit.

In the non-transitory recording medium according to an embodiment, the second power may not be provided to the second protection circuit.

The non-transitory recording medium according to an embodiment may store instructions to perform an operation of, when the first external power source is connected to the first interface, providing a first voltage output from the first protection circuit, based on the first power, to the fourth protection circuit.

In the non-transitory recording medium according to an embodiment, in response to a first signal based on the first voltage, the first power may not be provided to the fourth protection circuit.

The non-transitory recording medium according to an embodiment may store instructions to perform an operation of, when the second external power source is connected to the second interface, providing a second voltage output from the third protection circuit, based on the second power, to the second protection circuit.

In the non-transitory recording medium according to an embodiment, in response to a second signal based on the second voltage, the second protection circuit may be configured to not provide the second power to the third protection circuit.

The non-transitory recording medium according to an embodiment may store instructions to perform an operation of providing a predetermined third voltage to the second protection circuit and providing third power provided from the charging circuit to an external electronic device through the fourth protection circuit and the third protection circuit.

In the non-transitory recording medium according to an embodiment, in response to a third signal based on the third voltage, the third power may be configured not to be provided to the second protection circuit.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

In a first example, an electronic device (e.g. 201) is provided comprising: a first interface (e.g. 201a); a second interface (e.g. 201b); charging circuitry (e.g. 250); first protection circuitry (e.g. 210) and second protection circuitry (e.g. 220) connected in series with each other between the first interface and the charging circuitry, wherein the first protection circuitry is connected to the first interface and the second protection circuitry, and the second protection circuitry is connected to the first protection circuitry and the charging circuitry, wherein the first protection circuitry includes a first element (e.g. 211), and the second protection circuit includes a second element (e.g. 221); third protection circuitry (e.g. 230) and fourth protection circuitry (e.g. 240) connected in series with each other between the second interface and the charging circuitry, wherein the third protection circuitry is connected to the second interface and the fourth protection circuitry, and the fourth protection circuitry is connected to the third protection circuitry and the charging circuitry, wherein the third protection circuitry includes a third element (e.g. 231), and the fourth protection circuitry includes a fourth element (e.g. 241), at least one control circuitry, and memory storing instructions, wherein the instructions, when executed by the at least one control circuitry, cause the electronic device to: detect that a first external power source is connected to the first interface, based on the detection, control the electronic device to provide a first power provided from the first external power source to the charging circuitry through the first protection circuitry and the second protection circuitry, and control the electronic device not to conduct a first current corresponding to the first power to the fourth protection circuitry, and detect that a second external power source is connected to the second interface, based on the detection, control the electronic device to provide a second power provided from the second external power source to the charging circuitry through the third protection circuitry and the fourth protection circuitry, and control the electronic device not to conduct a second current corresponding to the second power to the second protection circuitry.

In a second example, there is provided the electronic device of the first example, wherein the instructions cause the electronic device to: detect that the first external power source is connected to the first interface, based on the detection, control the electronic device to provide a first voltage output from the first protection circuitry based on the first power to the fourth protection circuitry, and in response to a first signal based on the first voltage, control the electronic device not to conduct the first current to the fourth protection circuitry.

In a third example, there is provided the electronic device of one of the first to second examples, wherein the instructions cause the electronic device to: detect that the second external power source is connected to the second interface, based on the detection, control the electronic device to provide a second voltage output from the third protection circuitry based on the second power to the second protection circuitry, and in response to a second signal based on the second voltage, control the electronic device not to conduct the second current to the second protection circuitry.

In a fourth example, there is provided the electronic device of one of the first to third examples, wherein the instructions cause the electronic device to: provide a third voltage to the second protection circuitry when an external electronic device is connected to the second interface, wherein a third power is provided from the charging circuitry to the external electronic device through the fourth protection circuitry and the third protection circuitry, and in response to a third signal based on the third voltage, control the electronic device not to conduct a third current corresponding to a third power provided from the charging circuitry to the second protection circuitry.

In a fifth example, there is provided the electronic device of one of the first to fourth examples, wherein an enable terminal of the first protection circuitry and an enable terminal of the third protection circuitry are connected to ground.

In a sixth example, there is provided the electronic device of one of the first to fifth examples, wherein the first protection circuitry is connected to an enable terminal of the fourth protection circuitry, and wherein the third protection circuitry is connected to an enable terminal of the second protection circuitry.

In a seventh example, there is provided the electronic device of one of the first to sixth examples, wherein an output terminal of the first protection circuitry is connected to an output terminal of the second protection circuitry, and wherein an output terminal of the third protection circuitry is connected to an output terminal of the fourth protection circuitry.

In an eighth example, there is provided the electronic device of one of the first to seventh examples, further comprising: a first resistor (e.g. 311) and a second resistor (e.g. 321), wherein the second protection circuitry is connected to the first resistor and the second resistor, wherein the first resistor is connected to the third protection circuitry, the second protection circuitry, and the second resistor, and wherein the second resistor is connected to the first resistor, the first protection circuitry, and ground.

In a ninth example, there is provided the electronic device of one of the first to eighth examples, further comprising: a third resistor (e.g. 331) and a fourth resistor (e.g. 341), wherein the fourth protection circuitry is connected to the third resistor and the fourth resistor, wherein the third resistor is connected to the first protection circuitry, the fourth protection circuitry, and the fourth resistor, and wherein the fourth resistor is connected to the third resistor, the fourth protection circuitry, and ground.

In a tenth example, there is provided the electronic device of one of the first to ninth examples, further comprising: a fifth diode (e.g. 350) and a sixth diode (e.g. 360) configured to prevent overvoltage from being provided to the at least one control circuitry, wherein one end of the fifth diode is connected to the third protection circuitry, and the another end of the fifth diode is connected to the second protection circuitry, and wherein one end of the sixth diode is connected to the second protection circuitry, and another end of the sixth diode is connected to the control circuitry.

In an eleventh example, there is provided the electronic device of one of the first to tenth examples, wherein the first interface includes a pogo interface, or a contact interface, and wherein the second interface includes a universal serial bus (USB) interface.

In a twelfth example, there is provided the electronic device of one of the first to second examples, wherein: a drain terminal of a first FET (e.g. 211b) included in the first element is connected to an input terminal of the first protection circuitry, a source terminal of the first FET is connected to an output terminal of the first protection circuitry, a source terminal of a second FET (e.g. 221b) included in the second element is connected to an output terminal of the second protection circuitry, a drain terminal of the second FET is connected to an input terminal of the second protection circuitry, a drain terminal of a third FET (e.g. 231b) included in the third element is connected to an input terminal of the third protection circuitry, a source terminal of the third FET is connected to an output terminal of the third protection circuitry, and a source terminal of a fourth FET (e.g. 241b) included in the fourth element is connected to an output terminal of the fourth protection circuitry, a drain terminal of the fourth FET is connected to an input terminal of the fourth protection circuitry.

In a thirteenth example, there is provided a method of operating an electronic device (e.g. 201), wherein the electronic device comprises: a first interface (e.g. 201a); a second interface (e.g. 201b); charging circuitry (e.g. 250); first protection circuitry (e.g. 210) and second protection circuitry (e.g. 220) connected in series with each other between the first interface and the charging circuitry, the first protection circuitry being connected to the first interface and the second protection circuitry, the second protection circuitry being connected to the first protection circuitry and the charging circuitry, the first protection circuitry comprising a first element (e.g. 211), and the second protection circuitry comprising a second element (e.g. 221); and third protection circuitry (e.g. 230) and fourth protection circuitry (e.g. 240) connected in series with each other between the second interface and the charging circuitry, the third protection circuitry being connected to the second interface and the fourth protection circuitry, the fourth protection circuitry being connected to the third protection circuitry and the charging circuitry, the third protection circuitry comprising a third element (e.g. 231), and the fourth protection circuitry comprising a fourth element (e.g. 241), and wherein the method comprises: detecting that a first external power source is connected to the first interface, based on the detection, controlling the electronic device to provide a first power provided from the first external power source to the charging circuitry through the first protection circuitry and the second protection circuitry, and controlling the electronic device not to conduct a first current corresponding to the first power to the fourth protection circuitry, and detecting that a second external power source is connected to the second interface, based on the detection, controlling the electronic device to provide a second power provided from the second external power source to the charging circuitry through the third protection circuitry and the fourth protection circuitry, and controlling the electronic device not to conduct a second current corresponding to the second power to the second protection circuitry.

In a fourteenth example, there is provided the method of the thirteenth to second examples, further comprising: detecting that the first external power source is connected to the first interface, based on the detection, controlling the electronic device to provide a first voltage output from the first protection circuitry, based on the first power, to the fourth protection circuitry, and controlling the electronic device not to conduct the second current to the second protection circuitry.

In a fifteenth example, there is provided the method of one of the thirteenth to fourteenth examples, further comprising: detecting that the second external power source is connected to the second interface, based on the detection, controlling the electronic device to provide a second voltage output from the third protection circuitry, based on the second power, to the second protection circuitry, and controlling the electronic device not to conduct the second current to the second protection circuitry in response to a second signal based on the second voltage.

In a sixteenth example, there is provided an electronic device (e.g. 201) comprising: a first interface (e.g. 201a); a second interface (e.g. 201b); charging circuitry (e.g. 250); first protection circuitry (e.g. 210) and second protection circuitry (e.g. 220) connected in series with each other between the first interface and the charging circuitry, wherein the first protection circuitry is connected to the first interface and the second protection circuitry, and the second protection circuitry is connected to the first protection circuitry and the charging circuitry; third protection circuitry (e.g. 230) and fourth protection circuitry (e.g. 240) connected in series with each other between the second interface and the charging circuitry, wherein the third protection circuitry is connected to the second interface and the fourth protection circuitry, and the fourth protection circuitry is connected to the third protection circuitry and the charging circuitry; at least one control circuitry; and memory storing instructions; wherein the instructions, when executed by the at least one control circuitry, cause the electronic device to: detect that a first external power source is connected to the first interface, based on detecting that the first external power source is connected to the first interface, control the electronic device to provide a first power provided from the first external power source to the charging circuitry through the first protection circuitry and the second protection circuitry, and control the electronic device to prevent, using the fourth protection circuitry, a first current corresponding to the first power being conducted to the third protection circuitry, detect that a second external power source is connected to the second interface, and based on detecting that the second external power source is connected to the second interface, control the electronic device to provide a second power provided from the second external power source to the charging circuitry through the third protection circuitry and the fourth protection circuitry, and control the electronic device to prevent, using the second protection circuitry, a second current corresponding to the second power being conducted to the first protection circuitry.

In a seventeenth example, there is provided the electronic device of the sixteenth example, wherein the instructions cause the electronic device to: based on detecting that the first external power source is connected to the first interface, control the electronic device to provide a first voltage output from the first protection circuitry based on the first power to the fourth protection circuitry, and in response to a first signal based on the first voltage, control the electronic device to prevent, using the fourth protection circuitry, a first current corresponding to the first power being conducted to the the third protection circuitry.

In an eighteenth example, there is provided the electronic device of any one of the sixteenth to seventeenth examples, wherein the instructions cause the electronic device to: based on detecting that the second external power source is connected to the second interface, control the electronic device to provide a second voltage output from the third protection circuitry based on the second power to the second protection circuitry, and in response to a second signal based on the second voltage, control the electronic device to prevent, using the second protection circuitry, a second current corresponding to the second power being conducted to the first protection circuitry.

In a nineteenth example, there is provided the electronic device of any one of the sixteenth to eighteenth examples, wherein the instructions cause the electronic device to: provide a third voltage to the second protection circuitry when an external electronic device is connected to the second interface, wherein a third power is provided from the charging circuitry to the external electronic device through the fourth protection circuitry and the third protection circuitry, and in response to a third signal based on the third voltage, control the electronic device to prevent, using the second protection circuitry, a second current corresponding to the second power being conducted to the first protection circuitry.

In a twentieth example, there is provided the electronic device of any one of the sixteenth to nineteenth examples, wherein an enable terminal of the first protection circuitry and an enable terminal of the third protection circuitry are connected to ground.

In a twenty-first example, there is provided the electronic device of any one of the sixteenth to twentieth examples, wherein the first protection circuitry is connected to an enable terminal of the fourth protection circuitry, and wherein the third protection circuitry is connected to an enable terminal of the second protection circuitry.

In a twenty-second example, there is provided the electronic device of any one of the sixteenth to twenty-first examples, wherein an output terminal of the first protection circuitry is connected to an output terminal of the second protection circuitry, and wherein an output terminal of the third protection circuitry is connected to an output terminal of the fourth protection circuitry.

In a twenty-third example, there is provided the electronic device of any one of the sixteenth to twenty-second examples, further comprising: a first resistor (e.g. 311) and a second resistor (e.g. 321), wherein the second protection circuitry is connected to the first resistor and the second resistor, wherein the first resistor is connected to the third protection circuitry, the second protection circuitry, and the second resistor, and wherein the second resistor is connected to the first resistor, the first protection circuitry, and ground.

In a twenty-fourth example, there is provided the electronic device of any one of the sixteenth to twenty-third examples, further comprising: a third resistor (e.g. 331) and a fourth resistor (e.g. 341), wherein the fourth protection circuitry is connected to the third resistor and the fourth resistor, wherein the third resistor is connected to the first protection circuitry, the fourth protection circuitry, and the fourth resistor, and wherein the fourth resistor is connected to the third resistor, the fourth protection circuitry, and ground.

In a twenty-fifth example, there is provided the electronic device of any one of the sixteenth to twenty-fourth examples, further comprising: a fifth diode (e.g. 350) and a sixth diode (e.g. 360) configured to prevent overvoltage from being provided to the at least one control circuitry, wherein one end of the fifth diode is connected to the third protection circuitry, and the another end of the fifth diode is connected to the second protection circuitry, and wherein one end of the sixth diode is connected to the second protection circuitry, and another end of the sixth diode is connected to the control circuitry.

In a twenty-sixth example, there is provided the electronic device of any one of the sixteenth to twenty-fifth examples, wherein the first interface includes a pogo interface, or a contact interface, and wherein the second interface includes a universal serial bus (USB) interface.

In a twenty-seventh example, there is provided the electronic device of any one of the sixteenth to twenty-sixth examples, wherein: a drain terminal of a first FET (e.g. 211b) included in a first element (e.g. 211) of the first protection circuitry is connected to an input terminal of the first protection circuitry, and a source terminal of the first FET is connected to an output terminal of the first protection circuitry, a source terminal of a second FET (e.g. 221b) included in a second element (e.g. 221) of the second protection circuitry is connected to an output terminal of the second protection circuitry, and a drain terminal of the second FET is connected to an input terminal of the second protection circuitry, a drain terminal of a third FET (e.g. 231b) included in a third element (e.g. 231) of the third protection circuitry is connected to an input terminal of the third protection circuitry, and a source terminal of the third FET is connected to an output terminal of the third protection circuitry, and a source terminal of a fourth FET (e.g. 241b) included in a fourth element (e.g. 241) of the fourth protection circuitry is connected to an output terminal of the fourth protection circuitry, and a drain terminal of the fourth FET is connected to an input terminal of the fourth protection circuitry.

In a twenty-eighth example, there is provided the electronic device of the twenty-seventh example, wherein controlling the electronic device to prevent, using the fourth protection circuitry, a first current corresponding to the first power being conducted to the the third protection circuitry comprises controlling a gate of the fourth FET to prevent current flow through the fourth FET; and wherein controlling the electronic device to prevent, using the second protection circuitry, a second current corresponding to the second power being conducted to the first protection circuitry comprises controlling a gate of the second FET to prevent current flow through the second FET.

In a twenty-ninth example, there is provided the electronic device of any one of the sixteenth to twenty-eighth examples, wherein: a cathode terminal of a first diode (e.g. 211a) included in a first element (e.g. 211) of the first protection circuitry is connected to an input terminal of the first protection circuitry, and an anode terminal of the first diode is connected to an output terminal of the first protection circuitry, a cathode terminal of a second diode (221a) included in a second element (221) of the second protection circuitry is connected to an input terminal of the second protection circuitry, and an anode terminal of the second diode is connected to an output terminal of the second protection circuitry, a cathode terminal of a third diode (231a) included in a third element (231) of the third protection circuitry is connected to an input terminal of the third protection circuitry, and an anode terminal of the third diode is connected to an output terminal of the third protection circuitry, and a cathode terminal of a fourth diode (241a) included in a fourth element (241) of the fourth protection circuitry is connected to an input terminal of the fourth protection circuitry, and an anode terminal of the fourth diode is connected to an output terminal of the fourth protection circuitry.

In a thirtieth example, there is provided a method of operating an electronic device (e.g. 201), wherein the electronic device comprises: a first interface (e.g. 201a); a second interface (e.g. 201b); charging circuitry (e.g. 250); first protection circuitry (e.g. 210) and second protection circuitry (e.g. 220) connected in series with each other between the first interface and the charging circuitry, the first protection circuitry being connected to the first interface and the second protection circuitry, the second protection circuitry being connected to the first protection circuitry and the charging circuitry; and third protection circuitry (e.g. 230) and fourth protection circuitry (e.g. 240) connected in series with each other between the second interface and the charging circuitry, the third protection circuitry being connected to the second interface and the fourth protection circuitry, the fourth protection circuitry being connected to the third protection circuitry and the charging circuitry, and wherein the method comprises: detecting that a first external power source is connected to the first interface, based on detecting that the first external power source is connected to the first interface, controlling the electronic device to provide a first power provided from the first external power source to the charging circuitry through the first protection circuitry and the second protection circuitry, and controlling the electronic device to prevent, using the fourth protection circuitry, a first current corresponding to the first power being conducted to the the third protection circuitry, and detecting that a second external power source is connected to the second interface, based on detecting that the second external power source is connected to the second interface, controlling the electronic device to provide a second power provided from the second external power source to the charging circuitry through the third protection circuitry and the fourth protection circuitry, and controlling the electronic device to prevent, using the second protection circuitry, a second current corresponding to the second power being conducted to the first protection circuitry.

## Claims

1. An electronic device (201) comprising:
a first interface (201a);
a second interface (201b);
charging circuitry (250);
first protection circuitry (210) and second protection circuitry (220) connected in series with each other between the first interface and the charging circuitry, wherein the first protection circuitry is connected to the first interface and the second protection circuitry, and the second protection circuitry is connected to the first protection circuitry and the charging circuitry;
third protection circuitry (230) and fourth protection circuitry (240) connected in series with each other between the second interface and the charging circuitry, wherein the third protection circuitry is connected to the second interface and the fourth protection circuitry, and the fourth protection circuitry is connected to the third protection circuitry and the charging circuitry;
at least one control circuitry; and
memory storing instructions;
wherein the instructions, when executed by the at least one control circuitry, cause the electronic device to:
detect that a first external power source is connected to the first interface,
based on detecting that the first external power source is connected to the first interface, control the electronic device to provide a first power provided from the first external power source to the charging circuitry through the first protection circuitry and the second protection circuitry, and control the electronic device to prevent, using the fourth protection circuitry, a first current corresponding to the first power being conducted to the third protection circuitry,
detect that a second external power source is connected to the second interface, and
based on detecting that the second external power source is connected to the second interface, control the electronic device to provide a second power provided from the second external power source to the charging circuitry through the third protection circuitry and the fourth protection circuitry, and control the electronic device to prevent, using the second protection circuitry, a second current corresponding to the second power being conducted to the first protection circuitry.

2. The electronic device of claim 1, wherein the instructions cause the electronic device to:
based on detecting that the first external power source is connected to the first interface, control the electronic device to provide a first voltage output from the first protection circuitry based on the first power to the fourth protection circuitry, and
in response to a first signal based on the first voltage, control the electronic device to prevent, using the fourth protection circuitry, a first current corresponding to the first power being conducted to the the third protection circuitry.

3. The electronic device of any one of claims 1 to 2, wherein the instructions cause the electronic device to:
based on detecting that the second external power source is connected to the second interface, control the electronic device to provide a second voltage output from the third protection circuitry based on the second power to the second protection circuitry, and
in response to a second signal based on the second voltage, control the electronic device to prevent, using the second protection circuitry, a second current corresponding to the second power being conducted to the first protection circuitry.

4. The electronic device of any one of claims 1 to 3, wherein the instructions cause the electronic device to:
provide a third voltage to the second protection circuitry when an external electronic device is connected to the second interface, wherein a third power is provided from the charging circuitry to the external electronic device through the fourth protection circuitry and the third protection circuitry, and
in response to a third signal based on the third voltage, control the electronic device to prevent, using the second protection circuitry, a second current corresponding to the second power being conducted to the first protection circuitry.

5. The electronic device of any one of claims 1 to 4,
wherein an enable terminal of the first protection circuitry and an enable terminal of the third protection circuitry are connected to ground.

6. The electronic device of any one of claims 1 to 5,
wherein the first protection circuitry is connected to an enable terminal of the fourth protection circuitry, and
wherein the third protection circuitry is connected to an enable terminal of the second protection circuitry.

7. The electronic device of any one of claims 1 to 6,
wherein an output terminal of the first protection circuitry is connected to an output terminal of the second protection circuitry, and
wherein an output terminal of the third protection circuitry is connected to an output terminal of the fourth protection circuitry.

8. The electronic device of any one of claims 1 to 7, further comprising:
a first resistor (311) and a second resistor (321),
wherein the second protection circuitry is connected to the first resistor and the second resistor,
wherein the first resistor is connected to the third protection circuitry, the second protection circuitry, and the second resistor, and
wherein the second resistor is connected to the first resistor, the first protection circuitry, and ground.

9. The electronic device of any one of claims 1 to 8, further comprising:
a third resistor (331) and a fourth resistor (341),
wherein the fourth protection circuitry is connected to the third resistor and the fourth resistor,
wherein the third resistor is connected to the first protection circuitry, the fourth protection circuitry, and the fourth resistor, and
wherein the fourth resistor is connected to the third resistor, the fourth protection circuitry, and ground.

10. The electronic device of any one of claims 1 to 9, further comprising:
a fifth diode (350) and a sixth diode (360) configured to prevent overvoltage from being provided to the at least one control circuitry,
wherein one end of the fifth diode is connected to the third protection circuitry, and the another end of the fifth diode is connected to the second protection circuitry, and
wherein one end of the sixth diode is connected to the second protection circuitry, and another end of the sixth diode is connected to the control circuitry.

11. The electronic device of any one of claims 1 to 10,
wherein the first interface includes a pogo interface, or a contact interface, and
wherein the second interface includes a universal serial bus (USB) interface.

12. The electronic device of any one of claims 1 to 11, wherein:
a drain terminal of a first FET (211b) included in a first element (211) of the first protection circuitry is connected to an input terminal of the first protection circuitry, and a source terminal of the first FET is connected to an output terminal of the first protection circuitry,
a source terminal of a second FET (221b) included in a second element (221) of the second protection circuitry is connected to an output terminal of the second protection circuitry, and a drain terminal of the second FET is connected to an input terminal of the second protection circuitry,
a drain terminal of a third FET (231b) included in a third element (231) of the third protection circuitry is connected to an input terminal of the third protection circuitry, and a source terminal of the third FET is connected to an output terminal of the third protection circuitry, and
a source terminal of a fourth FET (241b) included in a fourth element (241) of the fourth protection circuitry is connected to an output terminal of the fourth protection circuitry, and a drain terminal of the fourth FET is connected to an input terminal of the fourth protection circuitry.

13. The electronic device of any one of claims 1 to 12, wherein controlling the electronic device to prevent, using the fourth protection circuitry, a first current corresponding to the first power being conducted to the the third protection circuitry comprises controlling a gate of the fourth FET to prevent current flow through the fourth FET; and
wherein controlling the electronic device to prevent, using the second protection circuitry, a second current corresponding to the second power being conducted to the first protection circuitry comprises controlling a gate of the second FET to prevent current flow through the second FET.

14. The electronic device of any one of claims 1 to 13, wherein:
a cathode terminal of a first diode (211a) included in a first element (211) of the first protection circuitry is connected to an input terminal of the first protection circuitry, and an anode terminal of the first diode is connected to an output terminal of the first protection circuitry,
a cathode terminal of a second diode (221a) included in a second element (221) of the second protection circuitry is connected to an input terminal of the second protection circuitry, and an anode terminal of the second diode is connected to an output terminal of the second protection circuitry,
a cathode terminal of a third diode (231a) included in a third element (231) of the third protection circuitry is connected to an input terminal of the third protection circuitry, and an anode terminal of the third diode is connected to an output terminal of the third protection circuitry, and
a cathode terminal of a fourth diode (241a) included in a fourth element (241) of the fourth protection circuitry is connected to an input terminal of the fourth protection circuitry, and an anode terminal of the fourth diode is connected to an output terminal of the fourth protection circuitry.

15. A method of operating an electronic device (201),
wherein the electronic device comprises:
a first interface (201a);
a second interface (201b);
charging circuitry (250);
first protection circuitry (210) and second protection circuitry (220) connected in series with each other between the first interface and the charging circuitry, the first protection circuitry being connected to the first interface and the second protection circuitry, the second protection circuitry being connected to the first protection circuitry and the charging circuitry; and
third protection circuitry (230) and fourth protection circuitry (240) connected in series with each other between the second interface and the charging circuitry, the third protection circuitry being connected to the second interface and the fourth protection circuitry, the fourth protection circuitry being connected to the third protection circuitry and the charging circuitry, and
wherein the method comprises:
detecting that a first external power source is connected to the first interface,
based on detecting that the first external power source is connected to the first interface, controlling the electronic device to provide a first power provided from the first external power source to the charging circuitry through the first protection circuitry and the second protection circuitry, and controlling the electronic device to prevent, using the fourth protection circuitry, a first current corresponding to the first power being conducted to the the third protection circuitry, and
detecting that a second external power source is connected to the second interface,
based on detecting that the second external power source is connected to the second interface, controlling the electronic device to provide a second power provided from the second external power source to the charging circuitry through the third protection circuitry and the fourth protection circuitry, and controlling the electronic device to prevent, using the second protection circuitry, a second current corresponding to the second power being conducted to the first protection circuitry.
